(19) Europäisches Patentamt
European Patent Office
Office européen des brevets

(11) Veröffentlichungsnummer: **0 271 893 B1**

(12) **EUROPÄISCHE PATENTSCHRIFT**

(45) Veröffentlichungstag der Patentschrift: **29.05.91**

(51) Int. Cl.⁵: **C09B 62/51,** D06P 1/384

(21) Anmeldenummer: **87118642.5**

(22) Anmeldetag: **16.12.87**

(54) **Cyangruppenhaltige Azoverbindungen, Verfahren zu deren Herstellung und ihre Verwendung als Farbstoffe.**

(30) Priorität: **19.12.86 DE 3643386**

(43) Veröffentlichungstag der Anmeldung:
**22.06.88 Patentblatt 88/25**

(45) Bekanntmachung des Hinweises auf die Patenterteilung:
**29.05.91 Patentblatt 91/22**

(84) Benannte Vertragsstaaten:
**BE CH DE ES FR GB IT LI**

(56) Entgegenhaltungen:
**FR-A- 2 254 675**

(73) Patentinhaber: **HOECHST AKTIENGESELLSCHAFT**
**Postfach 80 03 20**
**W-6230 Frankfurt am Main 80(DE)**

(72) Erfinder: **Mischke, Peter, Dr.**
**Eichhornweg 2**
**W-6232 Bad Soden am Taunus(DE)**
Erfinder: **Schladetsch, Hans Jakob, Dr.**
**Völklingerweg 40**
**W-6000 Frankfurt am Main 71(DE)**

**EP 0 271 893 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der Textilfarbstoffe.

In der französischen Patentanmeldungs-Veröffentlichung Nr. 2 254 675 sind bereits Azoverbindungen bekannt, deren Benzol-Diazokomponenten eine Vinylsulfonylgruppe besitzen und in den ortho-Stellungen zur Azogruppe durch eine oder zwei Cyangruppen substituiert sind. Sie dienen als Farbstoffe zum Färben von Polyester-Baumwolle-Mischgeweben.

Mit der vorliegenden Erfindung wurden nunmehr neue, wertvolle Azoverbindungen entsprechend einer allgemeinen Formel (1)

$$(Y - SO_2)_n - \underset{\phantom{x}}{\overset{\overset{\displaystyle (CN)_m}{|}}{D}} - N = N - K \qquad (1)$$

gefunden, in welcher

- m für die Zahl 1 oder 2 steht, wobei die Cyangruppen in ortho-Stellung zur Azogruppe an D gebunden sind,
- n die Zahl 1 oder 2, bevorzugt 1, ist,
- Y eine ß-Sulfatoethyl-Gruppe ist,
- D einen gegebenenfalls zusätzlich substituierten, ansonsten von anionischen Gruppen freien Rest einer Diazokomponente der Benzolreihe bedeutet und
- K einen gegebenenfalls zusätzlich substituierten, ansonsten von anionischen Gruppen freien Rest einer Kupplungskomponente bedeutet.

Eine vorstehend oder nachfolgend genannte Sulfatogruppe ist eine Gruppe der allgemeinen Formel $-OSO_3M$, in welcher

- M ein Wasserstoffatom oder ein Alkalimetall, wie Natrium, Kalium und Lithium, bedeutet.

Kupplungskomponenten sind beispielsweise solche aus der Anilin-, Naphthylamin- und Naphthol-Reihe, bevorzugt aus der Anilinreihe.

Substituenten in den Resten D und K sind beispielsweise Halogen, wie Fluor und Brom und insbesondere Chlor, Alkyl von 1 bis 4 C-Atomen, wie Methyl und Ethyl, substituiertes Alkyl von 1 bis 4 C-Atomen, Aryl, Alkoxy von 1 bis 4 C-Atomen, wie Methoxy und Ethoxy, Nitro, Cyan, Trifluoralkyl von 1 bis 4 C-Atomen, wie Trifluormethyl, Arylsulfonyl, Alkylsulfonyl von 1 bis 4 C-Atomen, Alkanoyloxy von 2 bis 5 C-Atomen, Aroyloxy, Alkanoylamino von 2 bis 5 C-Atomen, Aroylamino, Amino, durch gegebenenfalls substituiertes Alkyl von 1 bis 4 C-Atomen, Alkenyl von 2 bis 6 C-Atomen, Cycloalkyl und/oder Aryl mono- oder disubstituiertes Amino, Carbalkoxy von 2 bis 5 C-Atomen, Carbamoyl, durch gegebenenfalls substituiertes Alkyl von 1 bis 4 C-Atomen, Cycloalkyl und/oder Aryl subtituiertes Carbamoyl, Sulfamoyl und durch gegebenenfalls substituiertes Alkyl von 1 bis 4 C-Atomen, Cycloalkyl und/oder Aryl substituiertes Sulfamoyl, wobei in den vorgenannten Substituenten deren Arylreste noch durch nicht-ionische Substituenten substituiert sein können.

Substituierte Alkylgruppen sind beispielsweise solche, die durch 1 oder 2 Substituenten aus der Gruppe Chlor, Alkoxy von 1 bis 4 C-Atomen, gegebenenfalls substituiertes Aroylamino, gegebenenfalls substituiertes Aroyloxy, Carbalkoxy von 2 bis 5 C-Atomen, Alkanoylamino von 2 bis 5 C-Atomen, Alkanoyloxy von 2 bis 5 C-Atomen, Hydroxy, Cyano und gegebenenfalls substituiertes Aryl substituiert sind.

Alkenylgruppen sind bevorzugt solche von 2 bis 4 C-Atomen wie die Allylgruppe, und Cycloalkylgruppen sind bevorzugt solche von 5 bis C-Atomen, wie die Cyclohexylgruppe.

Arylreste sind beispielsweise Phenyl- und Naphthylreste; sie können substituiert sein, wie beispielsweise durch Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Cyano, Nitro, Sulfamoyl, durch Phenyl, Alkyl von 1 bis 4 C-Atomen und/oder Phenylalkyl mit einem Alkylrest von 1 bis 4 C-Atomen substituiertes Sulfamoyl, Carbamoyl und durch Phenyl, Alkyl von 1 bis 4 C-Atomen und/oder Phenylalkyl mit einem Alkylrest von 1 bis 4 C-Atomen mono- oder disubstituiertes Carbamoyl.

Bevorzugte Substituenten in D sind Alkylgruppen von 1 bis 4 C-Atomen, Alkoxygruppen von 1 bis 4 C-Atomen, Halogenatome, wie Chloratome, Trifluormethyl- und Alkylsulfonylgruppen von 1 bis 4 C-Atomen sowie Nitrogruppen.

Bevorzugte Substituenten in K sind beispielsweise Alkylgruppen von 1 bis 4 C-Atomen, Alkoxygruppen von 1 bis 4 C-Atomen, Alkanoylaminogruppen von 2 bis 5 C-Atomen, Benzoylaminogruppen, Alkoxyalkoxygruppen mit Alkyl- bzw. Alkylengruppen von jeweils 1 bis 4 C-Atomen sowie Chlor- und Bromatome, des weiteren Aminogruppen und durch Alkyl von 1 bis 4 C-Atomen, Cycloalkyl von 5 bis 8 C-Atomen, Alkenyl von 2 bis 4 C-Atomen und/oder Phenyl substituierte Aminogruppen, wobei die Alkylreste in diesen substituierten Aminogruppen noch jeweils durch eine Cyangruppe, Hydroxygruppe, Alkanoyloxygruppe von 2 bis 5 C-Atomen, Carbalkoxygruppe von 2 bis 5 C-Atomen oder Phenylgruppe substituiert sein können.

Von den erfindungsgemäßen Azoverbindungen der allgemeinen Formel (1) können insbesondere solche hervorgehoben werden, in denen der Benzolrest D außer einer oder zwei Cyangruppen und einer oder zwei Gruppen der Formel $-SO_2-Y$ noch durch Substituenten aus der Menge der Substituenten Alkyl von 1 bis 4 C-Atomen, Alkoxy von 1 bis 4 C-Atomen, Halogen, Trifluormethyl, Alkylsulfonyl von 1 bis 4 C-Atomen und Nitro substituiert sein kann, und K einen Benzolrest bedeutet, der, bevorzugt in para-Stellung zur Azogruppe, durch eine Aminogruppe oder durch eine durch Alkyl von 1 bis 4 C-Atomen, Cycloalkyl von 5 bis 8 C-Atomen, Alkenyl von 2 bis 4 C-Atomen und/oder Phenyl mono- oder disubstituierte Aminogruppe substituiert ist, wobei die Alkylreste in diesen substituierten Aminogruppen noch jeweils durch eine Cyangruppe, Hydroxygruppe, Alkanoyloxygruppe von 2 bis 5 C-Atomen, Carbalkoxygruppe von 2 bis 5 C-Atomen oder Phenylgruppe substituiert sein können, und der Benzolring von K gegebenenfalls zusätzlich durch Substituenten aus der Menge der Substituenten Alkyl von 1 bis 4 C-Atomen, Alkoxy von 1 bis 4 C-Atomen, Alkanoylamino von 2 bis 5 C-Atomen, Benzoylamino, Alkoxyalkoxy mit Alkyl und Alkylen von jeweils 1 bis 4 C-Atomen, Chlor und Brom substituiert sein kann.

Von den erfindungsgemäßen Verbindungen der allgemeinen Formel (1) sind insbesondere solche der allgemeinen Formel (1a) und (1b)

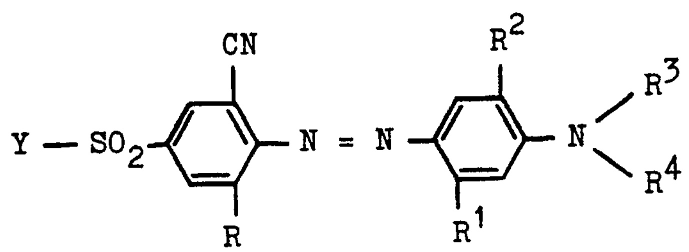

(1a)

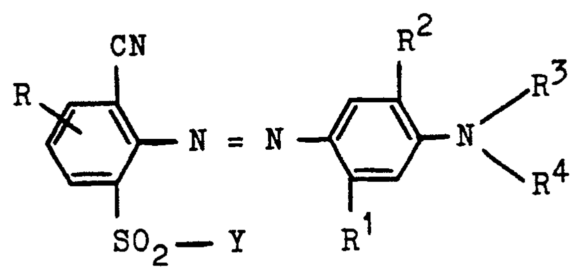

(1b)

bevorzugt. In diesen Formeln bedeuten:

- Y hat die oben genannte, insbesondere bevorzugte Bedeutung;
- R ist Wasserstoff, Alkyl von 1 bis 4 C-Atomen, hiervon bevorzugt Ethyl und insbesondere Methyl, Alkoxy von 1 bis 4 C-Atomen, hiervon bevorzugt Ethoxy und insbesondere Methoxy, Trifluormethyl, Alkylsulfonyl von 1 bis 4 C-Atomen, hiervon bevorzugt Ethylsulfonyl und insbesondere Methylsulfonyl, Nitro oder Cyano;
- $R^1$ ist Wasserstoff, Alkyl von 1 bis 4 C-Atomen, hiervon bevorzugt Ethyl und insbesondere Methyl, Alkoxy von 1 bis 4 C-Atomen, hiervon bevorzugt Ethoxy und insbesondere Methoxy, Alkanoylamino von 2 bis 5 C-Atomen, hiervon bevorzugt Propionylamino und insbesondere Acetylamino, oder Benzoylamino;
- $R^2$ ist Wasserstoff, Alkyl von 1 bis 4 C-Atomen, hiervon bevorzugt Ethyl und insbesondere Methyl, Alkoxy von 1 bis 4 C-Atomen, hiervon bevorzugt Ethoxy und insbesondere Methoxy, durch Alkoxy von 1 bis 4 C-Atomen substituiertes Alkoxy von 2 bis 4 C-Atomen, wie $\beta$-Methoxyethoxy, Chlor oder Brom;

$R^3$ ist Wasserstoff, Alkyl von 1 bis 4 C-Atomen, wie Ethyl und Methyl, durch Cyano, Hydroxy, Carbalkoxy von 2 bis 5 C-Atomen, wie Carbomethoxy, oder Alkanoyloxy von 2 bis 5 C-Atomen, wie Acetyloxy, substituiertes Alkyl von 2 bis 4 C-Atomen, hiervon bevorzugt β-Cyanoethyl, β-Hydroxyethyl, β-Acetyloxy-ethyl und β-Carbomethoxy-ethyl, oder ist Alkenyl von 2 bis 4 C-Atomen, wie Allyl;

$R^4$ ist Wasserstoff, Alkyl von 1 bis C-Atomen, wie Ethyl und Methyl, durch Cyano, Hydroxy, Carbalkoxy von 2 bis 5 C-Atomen, wie Carbomethoxy, oder Alkanoyloxy von 2 bis 5 C-Atomen, wie Acetyloxy, substituiertes Alkyl von 2 bis 4 C-Atomen, hiervon bevorzugt β-Cyanoethyl, β-Hydroxyethyl, β-Acetyloxy-ethyl und β-Carbomethoxy-ethyl, oder ist Alkenyl von 2 bis 4 C-Atomen, wie Allyl, oder Cyclohexyl, Phenyl oder Benzyl.

Bevorzugt sind hiervon insbesondere die Verbindungen entsprechend der allgemeinen Formel (1a). In den Verbindungen (1b) ist R bevorzugt Wasserstoff, Methyl, Methoxy, Methylsulfonyl oder Nitro.

Bevorzugt sind in den Verbindungen der allgemeinen Formeln (1a) und (1b) die Formelglieder $R^3$ Wasserstoff, Methyl, Ethyl, β-Cyanoethyl, β-Hydroxyethyl und β-Acetyloxyethyl oder allyl und $R^4$ Methyl, Ethyl, β-Cyanoethyl, β-Hydroxyethyl und β-Acetyloxyethyl.

Die neuen Verbindungen eignen sich zum Färben (einschließlich Bedrucken) von hydrophilen und hydrophoben Materialien, insbesondere Fasermaterialien, wie von hydroxy-, carbonamid- oder estergruppenhaltigen Fasermaterialien oder Mischungen solcher Fasermaterialien. Bevorzugt sind sie zum Färben von Polyesterfasern geeignet.

Gegenstand der vorliegenden Erfindung ist deshalb auch die Verwendung der Verbindungen der allgemeinen Formel (1) zum Färben solcher Materialien bzw. Verfahren zum Färben solcher Materialien unter Anwendung der Verbindungen (1), indem man diese aus wäßrigem Medium auf das Material appliziert und das so behandelte Material, gegebenenfalls in Gegenwart eines säurebindenden Mittels, einer Wärmebehandlung unterwirft.

Die vorliegende Erfindung betrifft weiterhin ein Verfahren zur Herstellung der Azoverbindungen der allgemeinen Formel (1), das dadurch gekennzeichnet ist, daß man eine Azoverbindung der allgemeinen Formel (2)

$$(Y-SO_2)_n-\underset{}{\overset{\overset{(Hal)_m}{|}}{D}}-N=N-K \qquad (2)$$

in welcher Y, m, n, D und K die obengenannten Bedeutungen haben, und Hal ein Halogen, wie Jod und insbesondere Brom oder Chlor, ist, das an D in den ortho-Stellungen zur Azogruppe gebunden steht, in einem flüssigen Reaktionsmedium mit Kupfer(I)-cyanid oder einer kupfercyanokomplexverbindung, wie beispielsweise einer Verbindung der allgemeinen Formel $Me[Cu(CN)_2]$ oder bevorzugt der allgemeinen Formel $Me_2[Cu(CN)_3]$, in welchen Me für ein Alkalimetall, wie Lithium oder Kalium oder bevorzugt Natrium, steht, und gegebenenfalls in Gegenwart eines katalysators, wie beispielsweise Kupferpulver, umsetzt.

Die Umsetzung der Azoverbindungen (2) erfolgt analog den für diese Reaktionsart des Austausches von Halogenatomen durch Cyangruppen üblichen und bekannten Verfahrensweisen und -bedingungen; dementsprechend dienen als flüssige Reaktionsmedien ebenso die für diese Reaktionsart aus der Literatur bekannten Löse- bzw. Verdünnungsmittel, wie Wasser und polare protische und polare aprotische organische Lösemittel. Polare protische Lösemittel sind insbesondere Mono-($C_1$-$C_4$)-Alkylether des Ethylenglykols und Diethylenglykols, wie Glykolmonomethylether und Diethylenglykol-monomethylether. Polare aprotische Lösemittel sind insbesondere Carbonsäureamide von Alkancarbonsäuren von 1 bis 6 C-Atomen, deren Lactame und deren am Stickstoff durch Alkyl von 1 bis 4 C-Atomen mono-oder dialkylierte Derivate, des weiteren Dialkylsulfoxide mit Alkylresten von 1 bis 4 C-Atomen, Trialkylphosphate mit Alkylresten von 1 bis 4 C-Atomen und Carbonsäurenitrile von Alkancarbonsäuren von 2 bis 5 C-Atomen; solche polaren aprotischen Lösemittel sind insbesondere N,N-Dimethylformamid, N-Methyl-pyrrolidon(2) Dimethylsulfoxid, Triethylphosphat und Acetonitril.

Die Reaktionstemperatur liegt im allgemeinen zwischen 5 und 150° C, wobei eine Temperatur zwischen 20 und 80° C bevorzugt ist.

Wählt man Wasser als Reaktionsmedium, so sollte der pH den Wert 7 nicht oder nur geringfügig überschreiten, da andernfalls die β-Sulfatoethylsulfonylgruppe vorzeitig in die Vinylsulfonylgruppe umgewandelt wird. Vorteilhaft arbeitet man in diesem Falle bei einem pH-Wert zwischen 5,5 und 7,5 insbesondere zwischen 6 und 7, zumal das Kupfer(I)-cyanid in diesem pH-Bereich zusammen mit 2 Äquivalenten

Natriumcyanid stabile wasserlösliche Komplexe bildet.

Die erfolgreiche Durchführbarkeit des erfindungsgemäßen Verfahrens, insbesondere wenn es in Wasser als Reaktionsmedium erfolgt, ist überraschend, weil unter den Verfahrensbedingungen des Halogen-/Cyan-Austausches keine Schädigung der β-SulfatoethylsulfonylGruppe(n) auftritt. Es kommt nicht, wie erwartet werden könnte, unter dem Einfluß des nucleophilen Cyanidions zu einer Deprotonisierung und anschließenden Abspaltung der Sulfatogruppe im Sulfatoethylsulfonylrest, wie dies für den nucleophilen Angriff des Hydroxylions im alkalischen Medium auf die β-Sulfatoethylsulfonylgruppe bekannt ist.

Die Ausgangsverbindungen der allgemeinen Formel (2) können in üblicher Weise aus den aus Formel (2) ersichtlichen oder ableitbaren Diazo- und Kupplungskomponenten durch übliche Diazotierung und Kupplung hergestellt werden, wobei im Falle, daß der Kupplungskomponentenrest eine Acylamino-oder Acyloxygruppe besitzt, der Acylrest auch erst nach der Kupplung durch Acylierung in eine bereits vorhandene Aminogruppe oder Hydroxygruppe eingeführt werden kann.

Diazokomponenten von Ausgangsverbindungen sind beispielsweise 2-Brom-4-(β-sulfatoethylsulfonyl)-anilin, 2,6-Dibrom-4-(β-sulfatoethylsulfonyl)-anilin, 2,6-Dichlor-4-(β-sulfatoethylsulfonyl)-anilin, 2-Brom-4-nitro-6-(β-sulfatoethylsulfonyl)-anilin, 2-Brom-6-nitro-4-(β-sulfatoethylsulfonyl)-anilin und 2-Brom-6-chlor-4-(β-sulfatoethylsulfonyl)-anilin sowie andere aus den nachfolgenden Beispielen ersichtliche Diazokomponenten.

Reste der Kupplungskomponenten von Ausgangsverbindungen der allgemeinen Formel (2) sind beispielsweise 2-Acetylamino-4-(N,N-dimethylamino)-phenyl, 2-Acetylamino-5-methoxy-4-(N,N-dimethylamino)-phenyl und 2-Acetylamino-5-methoxy-4-[N,N-bis-(β-acetyloxy-ethyl)-amino]-phenyl sowie andere aus den nachfolgenden Beispielen ersichtliche Kupplungskomponentenreste.

Die entsprechenden Ausgangsverbindungen (Diazo- und Kupplungskomponenten) für die Verbindungen der Formel (2) sind bekannt oder können analog hierfür bekannten Verfahrensweisen hergestellt werden, wie beispielsweise gemäß den Angaben der deutschen Patentschriften Nrs. 911 733 und 2 653 478.

Die erfindungsgemäßen Azoverbindungen eignen sich zum Färben von hydrophilen und hydrophoben Materialien.

Hydrophile Materialien sind insbesondere Cellulosefasermaterialien und carbonamidgruppenhaltige Materialien tierischen Ursprungs, wie Wolle und Haare. Hydrophobe Materialien, insbesondere in Form von Fasern, sind beispielsweise Celluloseester, wie Cellulose-diacetat, Cellulose-2 1/2-acetat oder Cellulose-triacetat, des weiteren synthetische carbonamidgruppenhaltige Materialien, wie Polyurethane und Polyamide, insbesondere als Fasern, wie Polyamid-6, Polyamid-6,6- und Polyamid-4, weiterhin Polyester, insbesondere als Fasern, wie Polyethylenglykolterephthalat in unmodifiziertem oder im modifizierten Zustand, wie mit Polyethylenoxid oder Polypropylenoxid in Form eines Blockpolymerisates modifiziertes Polyethylenglykolterephthalat, das ein bei Kochtemperatur carrierfrei färbbares Fasermaterial liefert. Natürlich können auch Mischungen solcher synthetischen Fasern untereinander oder mit natürlichen hydroxygruppenhaltigen oder carbonamidgruppenhaltigen Fasern, wie Cellulosefasern und Wolle, eingesetzt werden.

Während die bekannten Vinylsulfonyl-Verbindungen der FR-A-2 254 675 wasserunlösliche Verbindungen darstellen, die, um vorteilhaft angewendet werden zu können, zunächst einer Feinverteilung unter Zusatz üblicher Dispergiermittel unterworfen werden müssen und zusammen mit dem Dispergiermittel nach den üblichen Verfahrensweisen des Färbens und Bedruckens hydrophober synthetischer Materialien, insbesondere Fasermaterialien, aus vorzugsweise wäßrigem Bad eingesetzt werden, - Verfahrensweisen, die insbesondere für die Anwendung von Dispersionsfarbstoffen beschrieben sind -, können die erfindungsgemäßen β-Sulfatoethylsulfonyl-Verbindungen als wasserlösliche Farbstoffe vorteilhaft direkt und in Lösung und ohne irgendwelche Vorbehandlung auf das zu färbende Material, wie Fasermaterial, sei es nun hydrophiler oder hydrophober Natur, aufgebracht werden. Die färberische Anwendung dieser erfindungsgemäßen Verbindungen auf hydrophilen Fasermaterialien, wie beispielsweise Cellulose und Wolle, geschieht gemäß den Verfahrensweisen der Applikation und Fixierung von faserreaktiven Farbstoffen, die zahlreich in der Fachliteratur, wie auch in der bereits erwähnten deutschen Patentschrift 2 653 478, beschrieben werden. Die erfindungsgemäße β-Sulfatoethylsulfonyl-Verbindung zieht auf das Material, wie Fasermaterial, auf und geht mit ihm unter den angewandten Färbebedingungen, - vorzugsweise im pH-Bereich zwischen 5 und 8 für carbonamidgruppenhaltiges Material und vorzugsweise bei einem pH-Wert zwischen 7,5 und 10 für das hydroxygruppenhaltige Material, wobei jeweils Färbetemperaturen zwischen 20 und 100 °C oder gegebenenfalls höher angewendet werden können - , eine kovalente chemische, echte Bindung ein.

Zum Färben von hydrophobem Material, wie Fasermaterial, geht man ebenfalls von einer wäßrigen Lösung der erfindungsgemäßen β-Sulfatoethylsulfonyl-Verbindung aus und unterwirft das Material zusammen mit dieser wäßrigen Lösung bei einem pH-Wert zwischen 4 und 8, bevorzugt zwischen 5 und 7,5, einer Hitzebehandlung. Zur Einstellung und Einhaltung des pH-Wertes können säurebindende Mittel, einschließlich Puffergemische, verwendet werden, wie ein Alkalihydroxid oder ein basisches Alkalimetallsalz der Kohlensäure oder Phosphorsäure oder einer schwachen organischen Säure, oder ein Alkalimetallsalz,

das bei Hitzebehandlung Alkali freisetzt, wie beispielsweise Trichloracetat. Bei der Färbeweise kann man so vorgehen, daß man die wäßrige Lösung der erfindungsgemäßen β-Sulfatoethylsulfonyl-Verbindung, die bereits das säurebindende Mittel und ein für wasserlösliche Farbstoffe übliches Färbehilfsmittel, wie ein Elektrolytsalz, ein säurebindendes Puffergemisch, Harnstoff und Verdickungsmittel, gelöst enthält, auf das Material appliziert, beispielsweise durch Klotzen oder Bedrucken mittels dieser wäßrigen Färbeflotte oder durch Einbringen des zu färbenden Materials in die wäßrige Färbeflotte (Färbebad). Man kann aber auch so vorgehen, daß man die wäßrige Lösung der β-Sulfatoethylsulfonyl-Verbindung, gegebenenfalls zusammen mit solchen Färbehilfsmitteln, ohne das säurebindende Mittel auf das Fasermaterial appliziert und danach erst das säurebindende Mittel hinzugibt, so zu dem das zu färbende Material enthaltenden Färbebad oder durch Überklotzen oder Überdrucken des Materials mittels einer das säurebindende Mittel enthaltenden wäßrigen Lösung. Die Applikation der erfindungsgemäßen Verbindung erfolgt in der Regel bei niedriger Temperatur, wie beispielsweise bei einer Temperatur zwischen 15 und 30°C. Das auf diese Weise vorbehandelte Material wird sodann einer Wärmebehandlung ausgesetzt, sei es nun in der Färbeflotte selbst oder beispielsweise mittels überhitztem Wasserdampf, wobei man bevorzugt Temperaturen zwischen 40 und 220°C, insbesondere zwischen 60 und 200°C, wählt, wobei man bei Verwendung eines Färbebades erforderlichenfalls in einer geschlossenen Färbeapparatur arbeitet. Diese Färbeweisen lassen sich auch auf Cellulosefasermaterialien anwenden. Unter der Einwirkung der Wärme und des Alkali geht, analog den in Angewandte Chemie 74, 967 u. 968 (1962), gemachten Angaben, die wasserlösliche, nur eine (oder mehrere) β-Sulfatoethylsulfonyl-Gruppe(n) als alleinige wasserlöslich machende Gruppe enthaltende, erfindungsgemäße Verbindung unter Abspaltung der Sulfatogruppe in die Vinylsulfonyl-Verbindung über; diese liegt nun wegen der beim Färbeprozeß herrschenden erhöhten Temperatur weiter gelöst oder in höchst feinverteilter Form im Färbebad bzw. auf dem Material, wie insbesondere auf den Fasern und innerhalb des Fasermaterials, vor und wird auf dem Material fixiert.

Säurebindende Mittel, die für diese Verfahrensweisen verwendet werden, sind in der Regel alkalisch wirkende Mittel, vorzugsweise schwach alkalisch wirkende Mittel, wie Natriumbicarbonat, Natriumcarbonat, Dinatriumhydrogenphosphat, Natriumacetat, Natriumborat, ein Gemisch aus Dinatriumhydrogenphosphat und Natriumdihydrogenphosphat oder aus Natriumacetat und Essigsäure, oder Trichloracetat als Alkali freigebende Verbindung.

Eine bevorzugte Verwendung der erfindungsgemäßen β-Sulfatoethylsulfonyl-Verbindungen betrifft das Färben von Polyesterfasermaterialien, wobei man eine β-Sulfatoethylsulfonyl-Verbindung der allgemeinen Formel (1) in wäßriger Lösung zusammen mit einem säurebindenden Mittel gemäß den obigen Angaben auf das Polyesterfasermaterial aufbringt und es einer Hitzebehandlung unterwirft. Gleichermaßen vorteilhaft erfolgt die Färbung des Polyesterfasermaterials in wäßrigem Färbebad in Gegenwart eines säurebindenden Mittels und gegebenenfalls in Gegenwart von für wasserlösliche Farbstoffe üblichen Färbehilfsmitteln bei einer Temperatur zwischen 90 und 140°C, bevorzugt zwischen 95 und 135°C, und bei einem pH-Wert zwischen 4 und 9, bevorzugt zwischen 5 und 7,5. Unter diesen Anwendungsbedingungen wird die sich bildende Vinylsulfonyl-Azoverbindung durch Einwandern in die Faseroberfläche fixiert, ohne daß hierfür ein bei der Anwendung von Dispersionsfarbstoffen übliches Dispergiermittel oder Carrier zugegen sein muß.

Auf Polyester/Wolle-Mischgewebe, insbesondere aber auf Polyester/Baumwolle-Mischgewebe, lassen sich mit den erfindungsgemäßen Azoverbindungen gleichmäßige und ausgezeichnete Ton-in-Ton-Färbungen erzielen, indem man ein derartiges Mischgewebe beispielsweise mit einer Druckpaste bedruckt, die neben den im Textildruck üblichen Hilfsmitteln die erfindungsgemäße Azoverbindung und als säurebindendes Mittel beispielswiese Natriumhydrogencarbonat, Natriumacetat oder Trichloracetat enthält. Das bedruckte Gewebe wird anschließend getrocknet und zur Fixierung des Farbstoffes einer Hochtemperaturbehandlung unterworfen, wie beispielsweise für 20 bis 90 Sekunden bei 190 bis 220°C oder für 6 bis 8 Minuten bei 160 bis 200°C.

Die erfindungsgemäßen Azoverbindungen liefern sowohl nach den Färbeweisen des Färbens von hydrophilen Materialien, wie Fasermaterialien, für faserreaktive Farbstoffe als auch nach den erfindungsgemäßen Färbeweisen des Färbens von hydrophoben Materialien farbstarke Färbungen mit guten Echtheiten. Hiervon sind für die Cellulosefasermaterialien insbesondere die guten Wasch- und Lichtechtheiten, für Polyesterfasermaterialien die guten Sublimier-, Naß- und Lichtechtheiten bei sehr guter Baderschöpfung, auch bei tiefen Farbtönen, und für Mischgewebe, wie insbesondere Polyester/Baumwolle-Mischgewebe, außer den genannten Echtheiten insbesondere die sehr gute Ton-in-Ton-Färbung hervorzuheben.

Die nachstehenden Beispiele dienen zur Erläuterung der Erfindung. Die Teile sind Gewichtsteile und die Prozentangaben stellen Gewichtsprozente dar, sofern nicht anders vermerkt. Gewichtsteile stehen zu Volumenteilen in Relation wie Kilogramm zu Liter.

Die in diesen Beispielen formelmäßig beschriebenen Verbindungen sind in Form der freien Säuren angegeben, im allgemeinen werden sie in Form ihrer Natrium- oder Kaliumsalze hergestellt und isoliert und

in Form ihrer Salze zum Färben eingesetzt Ebenso können die in den nachfolgenden Beispielen, einschließlich Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die Absorptionsmaxima ($\lambda_{max}$-Werte) wurden bei 20°C in wäßriger Lösung der Alkalimetallsalze bestimmt, sofern nicht anders angegeben.

Beispiel 1

18,85 Teile einer aus 2-Brom-4-($\beta$-sulfatoethyl-sulfonyl)-anilin als Diazokomponente und 3-Diethylamino-acetanilid als Kupplungskomponente aufgebauten Azoverbindung wird als Natriumsalz in 100 Volumenteilen Dimethylsulfoxid gelöst; eine Lösung von 4,5 Teilen Kupfer(I)-cyanid und 2,5 Teilen Natriumcyanid in 50 Volumenteilen Dimethylsulfoxid wird hinzugegeben und der Ansatz sodann 18 Stunden bei 20 bis 25°C gerührt. Danach rührt man das Reaktionsgemisch in 500 Teile Wasser ein, klärt die Lösung mit 2 Teilen Kieselgur, filtriert sie und salzt die Azoverbindung durch Zugabe einer konzentrierten wäßrigen Natriumchloridlösung aus. Man saugt ab, wäscht den Rückstand mit halbkonzentrierter wäßriger Natriumchloridlösung und trocknet ihn.

Es werden 27,3 Teile eines elektrolythaltigen (vorwiegend natriumchloridhaltigen) Produktes mit einem Gehalt an 91 % des Alkalimetallsalzes (natriumsalzes) der Verbindung der Formel

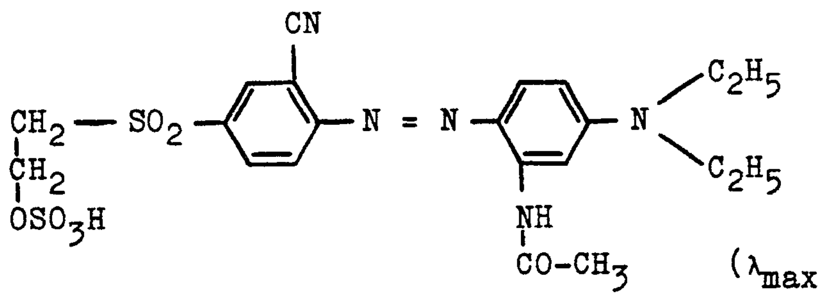

($\lambda_{max}$ = 528 nm)

erhalten. Diese erfindungsgemäße Azoverbindung besitzt wertvolle Farbstoffeigenschaften und ist insbesondere zum Färben von Polyesterfasern geeignet. So erhält man mit ihr ein kräftig und gleichmäßig in einem blaustichig roten Farbton gefärbtes Polyestermaterial, das gute Echtheiten, wie insbesondere gute Sublimier-, Naß- und Lichtechtheiten, besitzt, indem man 50 Teile eines üblichen Polyestergewebes in einem wäßrigen Färbebad, das 0,25 Teile dieser erfindungsgemäßen Azoverbindung und 3,5 Teile Natriumtrichloracetat gelöst enthält, bei 130°C während einer Stunde in geschlossener Färbeapparatur behandelt; es erfolgt hierbei eine sehr gute Erschöpfung des Bades.

Beispiel 2

Eine gegebenenfalls mittels einer 2n-Essigsäurelösung auf einen pH-Wert von 6 eingestellte, aus 150 Teilen Wasser, 1,79 Teilen Kupfer(I)-cyanid und 1,96 Teilen Natriumcyanid hergestellte Lösung einer Natriumkupfer(I)-cyanid-Komplexverbindung wird in eine ebenfalls auf einen pH-Wert von 6 gestellte, 60°C warme Lösung von 6,56 Teilen einer aus 2,6-Dibrom-4-($\beta$-sulfatoethylsulfonyl)-anilin als Diazokomponente und 3-Diethylamino-acetanilid als Kupplungskomponente aufgebauten Azoverbindung in 300 Teilen Wasser eingerührt. Sodann gibt man 0,1 Teile Kupferpulver hinzu und rührt den Ansatz eine Stunde bei 60°C weiter; im Verlauf der Reaktion schlägt die Farbe des Reaktionsgemisches von Orange nach Violett um (die Umsetzung läßt sich gut dünnschichtchromatographisch verfolgen). Nach beendeter Austauschreaktion der Brom- durch die Cyansubstituenten wird der Ansatz filtriert und die erfindungsgemäße Azoverbindung mittels 45 Teilen Natriumchlorid ausgesalzen, abgesaugt, mit halbkonzentrierter wäßriger Natriumchloridlösung nachgewaschen und getrocknet.

Es werden 6,1 Teile eines elektrolythaltigen (vorwiegend natriumchloridhaltigen) Produktes mit einem Gehalt an 80 % des Alkalimetallsalzes (Natriumsalzes) der Verbindung der Formel

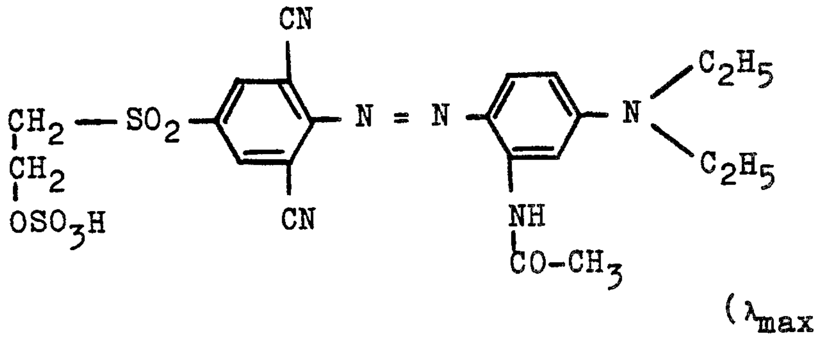

($\lambda_{max}$ = 550 nm)

erhalten. Diese erfindungsgemäße Azoverbindung besitzt wertvolle Farbstoffeigenschaften und ist insbesondere zum Färben von Polyesterfasern geeignet. So erhält man mit ihr eine Polyesterfärbung in einem kräftigen und egalen rotstichig blauen Farbton mit guten Echtheiten, wie insbesondere guten Sublimier-, Naß- und Lichtechtheiten, wenn man 50 Teile eines üblichen Polyestergewebes in einem wäßrigen Bad, das 0,25 Teile dieser erfindungsgemäßen Azoverbindung und 3,5 Teile Natrium-trichloracetat enthält, bei 130 °C während einer Stunde in geschlossener Färbeapparatur behandelt; es erfolgt hierbei eine sehr gute Erschöpfung des Bades.

Beispiele 3 bis 28

In den nachfolgenden Tabellenbeispielen sind weitere erfindungsgemäße Azoverbindungen mit Hilfe einer allgemeinen Formel (A)

$$D^1 — N = N — K^1 \qquad (A)$$

beschrieben. Sie lassen sich in erfindungsgemäßer Weise, so analog den obigen Ausführungsbeispielen, durch Umsetzung einer Ausgangsverbindung entsprechend der allgemeinen Formel (B)

$$D^2 — N = N — K^1 \qquad (B)$$

mit den in dem jeweiligen Tabellenbeispiel angegebenen Komponenten $D^2$ und $K^1$ durch Umsetzung von Kupfer(I)-cyanid oder einer Kupfercyanokomplexverbindung herstellen. Diese erfindungsgemäßen Azoverbindungen besitzen ebenfalls sehr gute Farbstoffeigenschaften und liefern auf hydrophilen und hydrophoben Materialien, wie Cellulosefasermaterialien, insbesondere jedoch auf Polyesterfasermaterialien, nach den in der Beschreibung angegebenen Anwendungsmethoden farbstarke, echte Färbungen mit dem in dem jeweiligen Tabellenbeispiel für die Polyesterfärbung angegebenen Farbton.

| Bsp. | Rest $D^2$ | Rest $D^1$ | Rest $K^1$ | Farbton |
|---|---|---|---|---|
| 3 | 4-(ß-Sulfatoethylsulfonyl)-2-chlor-phenyl | 4-(ß-Sulfatoethylsulfonyl)-2-cyano-phenyl | 4-Diethylamino-phenyl | rot |
| 4 | 4-(ß-Sulfatoethylsulfonyl)-2-brom-phenyl | 4-(ß-Sulfatoethylsulfonyl)-2-cyano-phenyl | 4-Diethylamino-phenyl | rot |
| 5 | 4-(ß-Sulfatoethylsulfonyl)-2-chlor-phenyl | 4-(ß-Sulfatoethylsulfonyl)-2-cyano-phenyl | 2-Propionylamino-4-diethylamino-phenyl | blaustichig rot |
| 6 | dito | dito | 2-Benzoylamino-4-diethylamino-phenyl | blaustichig rot |
| 7 | dito | dito | 4-N-(ß-Cyanoethyl)-amino-phenyl | rot |
| 8 | dito | dito | 4-N,N-Di-(ß-acetyloxyethyl)-amino-phenyl | rot |
| 9 | dito | dito | 4-(N-Ethyl-N-allyl)-amino-phenyl | rot |
| 10 | 2-Brom-4,6-di-(ß-sulfatoethylsulfonyl)-phenyl | 2-Cyano-4,6-di-(ß-sulfatoethylsulfonyl)-phenyl | 2-Acetylamino-4-diethylamino-phenyl | rotstichig blau |
| 11 | 2-Brom-4-(ß-sulfatoethylsulfonyl)-phenyl | 2-Cyano-4-(ß-sulfatoethylsulfonyl)-phenyl | 2-Acetylamino-5-methoxy-4-diethylamino-phenyl | rotstichig blau |
| 12 | dito | dito | 4-[N-(ß-Cyanoethyl)-N-(ß-hydroxyethyl)]-amino-phenyl | rot |
| 13 | dito | dito | 2-Methoxy-4-diethylamino-phenyl | rot |

| Bsp. | Rest $D^2$ | Rest $D^1$ | Rest $K^1$ | Farbton |
|---|---|---|---|---|
| 14 | 2-Brom-4-(ß-sulfatoethylsulfonyl)-phenyl | 2-Cyano-4-(ß-sulfatoethyl-sulfonyl)-phenyl | 2-Benzoylamino-4-dimethylamino-phenyl | rot |
| 15 | dito | dito | 4-[N-Ethyl-N-(ß-acetyl-oxyethyl)]-amino-phenyl | rot |
| 16 | dito | dito | 3-Chlor-4-N-(ß-cyanoethyl)-amino-phenyl | orange |
| 17 | 2-Brom-6-nitro-4-(ß-sulfatoethyl-sulfonyl)-phenyl | 2-Cyano-6-nitro-4-(ß-sulfatoethylsulfonyl)-phenyl | 2-Acetylamino-4-diethyl-amino-phenyl | rotstichig blau (551) |
| 18 | dito | dito | 2-Acetylamino-5-methoxy-4-diethylamino-phenyl | blau (570) |
| 19 | dito | dito | 2-Acetylamino-5-methoxy-4-N,N-di-(ß-acetyloxyethyl)-amino-phenyl | rotstichig blau (565) |
| 20 | 2,6-Dibrom-4-(ß-sulfatoethyl-sulfonyl)-phenyl | 2,6-Dicyano-4-(ß-sulfato-ethylsulfonyl)-phenyl | 4-[N-Ethyl-N-(ß-cyanoethyl)]-amino-phenyl | violett (540) |
| 21 | dito | dito | 2-Acetylamino-5-methoxy-4-diethylamino-phenyl | blau (568) |
| 22 | dito | dito | 2-Acetylamino-5-methoxy-4-N,N-di-(ß-acetyloxyethyl)-amino-phenyl | blau (560) |
| 23 | dito | dito | 2-Methyl-5-methoxy-4-diethyl-amino-phenyl | violett (548) |

| Bsp. | Rest $D^2$ | Rest $D^1$ | Rest $K^1$ | Farbton |
|---|---|---|---|---|
| 24 | 2-Brom-4-nitro-6-(ß-sulfato-ethylsulfonyl)-phenyl | 2-Cyano-4-nitro-6-(ß-sulfato-ethylsulfonyl)-phenyl | 2-Acetylamino-4-diethyl-amino-phenyl | blau (613) |
| 25 | dito | dito | 2-Acetylamino-5-methoxy-4-diethylamino-phenyl | grünstichig blau (631) |
| 26 | dito | dito | 2-Acetylamino-5-methoxy-4-N,N-di-(ß-acetyloxyethyl)-amino-phenyl | grünstichig blau (627) |
| 27 | dito | dito | 2-Propionylamino-5-(ß-methoxy-ethoxy)-4-ethylamino-phenyl | blau (616) |
| 28 | 2,6-Dibrom-4-(ß-sulfatoethyl-sulfonyl)-phenyl | 2,6-Dicyano-4-(ß-sulfato-ethylsulfonyl)-phenyl | dito | rotstichig blau (550) |

Anwendungsbeispiel 1

Ein Polyester-Baumwoll-Mischgewebe (im Mischungsverhältnis von 67:33) wird mit einer Druckpaste

bedruckt, die aus 200 Teilen einer 5%igen wäßrigen Lösung der in Beispiel 1 beschriebenen erfindungsgemäßen Azoverbindung, 400 Teilen einer wäßriger, etwa 4%igen Natriumalginat-Verdickung, 7 Teilen Natrium-Nitrobenzolsulfonat, 15 Teilen Natriumhydrogencarbonat, 50 Teilen Harnstoff und 328 Teilen Wasser besteht. Anschließend wird das bedruckte Gewebe getrocknet und sodann zur Fixierung der erfindungsgemäßen Verbindung auf dem Material 7 Minuten mittels überhitztem Wasserdampf von 175° C gedämpft. Das Gewebe wird anschließend mit kaltem Wasser gespült, mit warmem und hießem Wasser, das im Liter 0,5 g eines Waschmittels auf Basis Nonylphenol und Ethylenoxid enthält, behandelt, nochmals mit kaltem Wasser gespült und getrocknet.
Man erhält eine kräftige, blaustichig rote Färbung (Druck) mit hohen Naß-, Sublimier- und Lichtechtheiten.

Anwendungsbeispiel 2

50 Teile eines Gewebes aus carrierfrei färbbaren, mit Propylenoxid in Form eines Blockpolymerisates modifizierten Polyethylenterephthalatfasern wird in einem wäßrigen Bad, das 2,5 Teile der im Beispiel 18 beschriebenen erfindungsgemäßen Azoverbindung, 3 Teile Natriumacetat und 1 Teil Essigsäure enthält, eine Stunde bei Kochtemperatur gefärbt. Nach Beendigung des Färbeprozesses wird das gefärbte Gewebe zunächst mit Wasser gespült und sodann zur Fertigstellung 20 Minuten in einem neutralen wäßrigen Bad kochend geseift. Man erhält bei sehr guter Färbebaderschöpfung auf dem Fasermaterial eine blaue Färbung mit hervorragenden Licht-, Naß- und Thermofixierechtheiten.

## Ansprüche

**1.** Eine Azoverbindung, die der allgemeinen Formel (1)

$$(Y-SO_2)_n-\overset{\overset{\displaystyle (CN)_m}{|}}{D}-N=N-K \qquad (1)$$

entspricht, in welcher

- m für die Zahl 1 oder 2 steht, wobei die Cyangruppen in ortho-Stellung zur Azogruppe an D gebunden sind,
- n die Zahl 1 oder 2 bedeutet,
- Y eine ß-Sulfatoethyl-Gruppe ist,
- D einen gegebenenfalls zusätzlich substituierten, ansonsten von anionischen Gruppen freien Rest einer Diazokomponente der Benzolreihe bedeutet und
- K einen gegebenenfalls zusätzlich substituierten, ansonsten von anionischen Gruppen freien Rest einer Kupplungskomponente bedeutet.

**2.** Verbindung nach Anspruch 1, dadurch gekennzeichnet, daß die Kupplungskomponente ein Rest der Anilin-Reihe ist.

**3.** Verbindung nach Anspruch 1 oder 2, dadurch gekennzeichnet, daß die gegebenenfalls zusätzlichen Substituenten in D und K aus der Menge der folgenden Substituenten ausgewählt sind: Halogen, Alkyl von 1 bis 4 C-Atomen, substituiertes Alkyl von 1 bis 4 C-Atomen, Aryl, Alkoxy von 1 bis 4 C-Atomen, Nitro, Cyan, Trifluoralkyl von 1 bis 4 C-Atomen, Arylsulfonyl, Alkylsulfonyl von 1 bis 4 C-Atomen, Alkanoyloxy von 2 bis 5 C-Atomen, Aroyloxy, Alkanoylamino von 2 bis 5 C-Atomen, Aroylamino, Amino, durch gegebenenfalls substituiertes Alkyl von 1 bis 4 C-Atomen, Alkenyl von 2 bis 6 C-Atomen, Cycloalkyl und/oder Aryl substituiertes Amino, Carbalkoxy von 2 bis 5 C-Atomen, Carbamoyl, durch gegebenenfalls substituiertes Alkyl von 1 bis 4 C-Atomen, Cycloalkyl und/oder Aryl substituiertes Carbamoyl, Sulfamoyl und durch gegebenenfalls substituiertes Alkyl von 1 bis 4 C-Atomen, Cycloalkyl und/oder Aryl substituiertes Sulfamoyl, wobei in den vorgenannten Substituenten deren Arylreste noch durch nicht-ionische Substituenten substituiert sein können.

4. Verbindung nach Anspruch 1 oder 2, dadurch gekennzeichnet, daß die gegebenenfalls zusätzlichen Substituenten in D Alkylgruppen von 1 bis 4 C-Atomen, Alkoxygruppen von 1 bis 4 C-Atomen, Halogenatome, Trifluormethylgruppen, Alkylsulfonylgruppen von 1 bis 4 C-Atomen und Nitrogruppen sind und die gegebenenfalls zusätzlichen Substituenten in K Substituenten sind, die aus der Menge der folgenden Substituenten ausgewählt sind: Alkylgruppen von 1 bis 4 C-Atomen, Alkoxygruppen von 1 bis 4 C-Atomen, Alkanoylaminogruppen von 2 bis 5 C-Atomen, Alkanoylaminogruppen von 2 bis 5 C-Atomen, Benzoylaminogruppen, Alkoxyalkoxygruppen mit Alkyl- bzw. Alkylengruppen von jeweils 1 bis 4 C-Atomen, Chlor-und Bromatome, Aminogruppen und durch Alkyl von 1 bis 4 C-Atomen, Cycloalkyl von 5 bis 8 C-Atomen, Alkenyl von 2 bis 4 C-Atomen und/oder Phenyl substituierte Aminogruppen, wobei die Alkylreste in diesen substituierten Aminogruppen noch jeweils durch eine Cyangruppe, Hydroxygruppe, Alkanoyloxygruppe von 2 bis 5 C-Atomen, Carbalkoxygruppe von 2 bis 5 C-Atomen oder Phenylgruppe substituiert sein können.

5. Verbindung nach Anspruch 1, dadurch gekennzeichnet, daß D einen Benzolrest bedeutet, wobei D außer einer oder zwei Cyangruppen und einer oder zwei Gruppen der allgemeinen Formel $-SO_2-Y$ noch durch Substituenten aus der Menge der Substituenten Alkyl von 1 bis 4 C-Atomen, Alkoxy von 1 bis 4 C-Atomen, Halogen, Trifluormethyl, Alkylsulfonyl von 1 bis 4 C-Atomen und Nitro substituiert sein kann, und K einen Benzolrest bedeutet, der, bevorzugt in para-Stellung zur Azogruppe, durch eine Aminogruppe oder durch eine durch Alkyl von 1 bis 4 C-Atomen, Cycloalkyl von 5 bis 8 C-Atomen, Alkenyl von 2 bis 4 C-Atomen und/oder Phenyl substituierte Aminogruppe substituiert ist, wobei die Alkylreste in diesen substituierten Aminogruppen noch jeweils durch eine Cyangruppe, Hydroxygruppe, Alkanoyloxygruppe von 2 bis 5 C-Atomen, Carbalkoxygruppe von 2 bis 5 C-Atomen oder Phenylgruppe substituiert sein können, und K gegebenenfalls zusätzlich durch Substituenten aus der Menge der Substituenten Alkyl von 1 bis 4 C-Atomen, Alkoxy von 1 bis 4 C-Atomen, Alkanoylamino von 2 bis 5 C-Atomen, Benzoylamino, Alkoxyalkoxy mit Alkyl und Alkylen von jeweils 1 bis 4 C-Atomen, Chlor und Brom substituiert sein können.

6. Verbindung nach einem oder mehreren der Ansprüche 1 bis 5, dadurch gekennzeichnet, daß n für die Zahl 1 steht.

7. Verbindung nach Anspruch 1 entsprechend der allgemeinen Formel (1a)

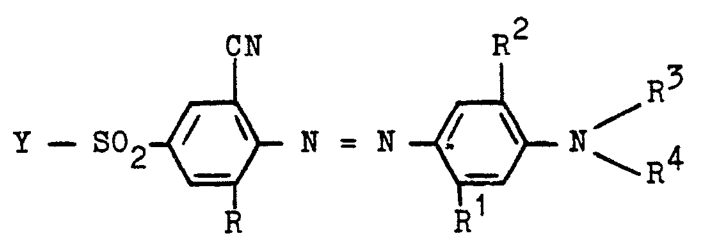

(1a)

in welcher

Y $\beta$-Sulfatoethyl ist,

R Wasserstoff, Alkyl von 1 bis 4 C-Atomen, Alkoxy von 1 bis 4 C-Atomen, Trifluormethyl, Alkylsulfonyl von 1 bis 4 C-Atomen, Nitro oder Cyano ist,

$R^1$ Wasserstoff, Alkyl von 1 bis 4 C-Atomen, Alkoxy von 1 bis 4 C-Atomen, Alkanoylamino von 2 bis 5 C-Atomen oder Benzoylamino ist,

$R^2$ Wasserstoff, Alkyl von 1 bis 4 C-Atomen, Alkoxy von 1 bis 4 C-Atomen, durch Alkoxy von 1 bis 4 C-Atomen substituiertes Alkoxy von 2 bis 4 C-Atomen, Chlor oder Brom ist,

$R^3$ Wasserstoff, Alkyl von 1 bis 4 C-Atomen, durch Cyano, Hydroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen ist und

$R^4$ Wasserstoff, Alkyl von 1 bis 4 C-Atomen, durch Cyano, Hydroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen, Cyclohexyl, Phenyl oder Benzyl ist.

8. Verbindung nach Anspruch 1 entsprechend der allgemeinen Formel (1b)

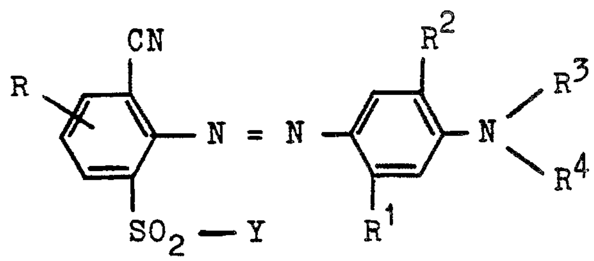

(1b)

in welcher

Y $\beta$-Sulfatoethyl ist,

R Wasserstoff, Alkyl von 1 bis 4 C-Atomen, Alkoxy von 1 bis 4 C-Atomen, Trifluormethyl, Alkylsulfonyl von 1 bis 4 C-Atomen, Nitro oder Cyano ist,

$R^1$ Wasserstoff, Alkyl von 1 bis 4 C-Atomen, Alkoxy von 1 bis 4 C-Atomen, Alkanoylamino von 2 bis 5 C-Atomen oder Benzoylamino ist,

$R^2$ Wasserstoff, Alkyl von 1 bis 4 C-Atomen, Alkoxy von 1 bis 4 C-Atomen, durch Alkoxy von 1 bis 4 C-Atomen substituiertes Alkoxy von 2 bis 4 C-Atomen, Chlor oder Brom ist,

$R^3$ Wasserstoff, Alkyl von 1 bis 4 C-Atomen, durch Cyano, Hydroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen ist und

$R^4$ Wasserstoff, Alkyl von 1 bis 4 C-Atomen, durch Cyano, Hyroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen, Cyclohexyl, Phenyl oder Benzyl ist.

**9.** Verbindung nach Anspruch 1 der Formel

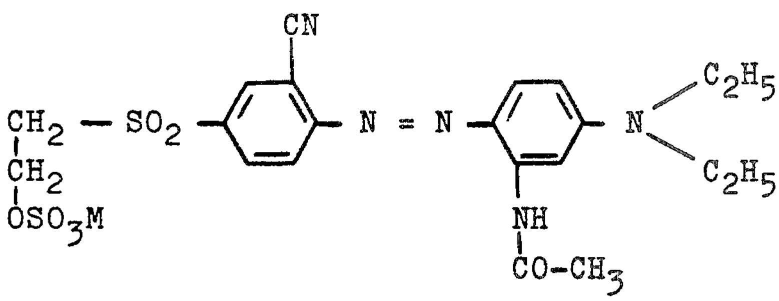

in welcher M für ein Wasserstoffatom oder bevorzugt ein Alkalimetall steht.

**10.** Verbindung nach Anspruch 1 der Formel

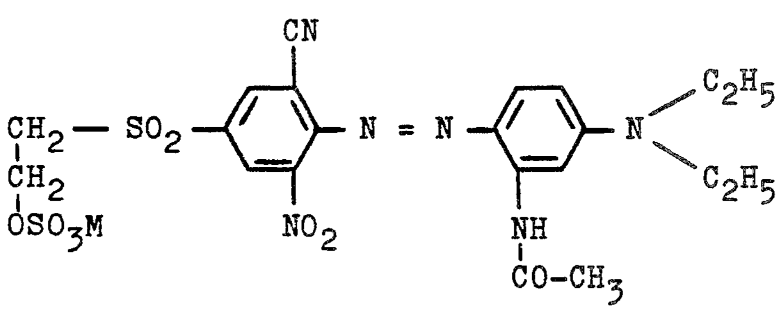

in welcher M für ein Wasserstoffatom oder bevorzugt ein Alkalimetall steht.

**11.** Verbindung nach Anspruch 1 der Formel

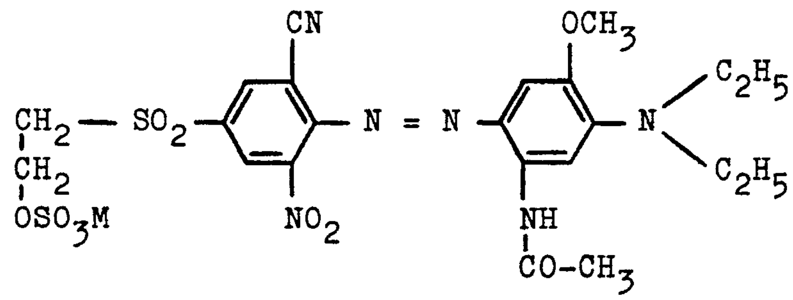

in welcher M für ein Wasserstoffatom oder bevorzugt ein Alkalimetall steht.

12. Verbindung nach Anspruch 1 der Formel

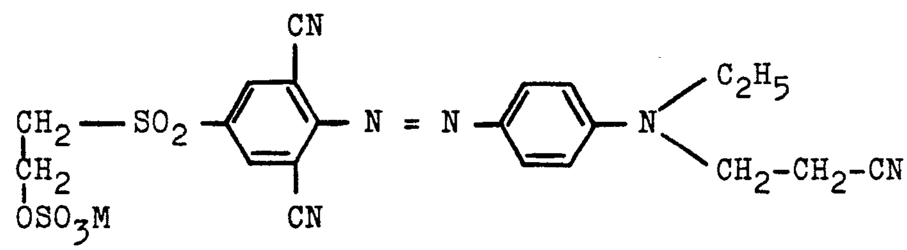

in welcher M für ein Wasserstoffatom oder bevorzugt ein Alkalimetall steht.

13. Verfahren zur Herstellung einer in Anspruch 1 genannten und definierten Azoverbindung der allgemeinen Formel (1), dadurch gekennzeichnet, daß man eine Azoverbindung der allgemeinen Formel (2)

$$(Y\text{-}SO_2)_n - \underset{}{\overset{(Hal)_m}{\overset{|}{D}}} - N = N - K \qquad (2)$$

in welcher Y, m, n, D und K die in Anspruch 1 genannten Bedeutungen haben und Hal ein Halogenatom ist, das an D in den ortho-Stellungen zur Azogruppe gebunden steht, in einem flüssigen Reaktionsmedium mit Kupfer(I)-cyanid oder einer Kupfercyanokomplexverbindung und in Abwesenheit oder in Gegenwart eines Katalysators umsetzt.

14. Verwendung einer Azoverbindung entsprechend der in Anspruch 1 genannten und definierten allgemeinen Formel (1) zum Färben von hydrophilen oder hydrophoben Materialien, insbesondere Fasermaterialien, oder Gemischen solcher Materialien.

15. Verwendung nach Anspruch 14, dadurch gekennzeichnet, daß das Material ein Cellulosefasermaterial oder Wolle ist.

16. Verwendung nach Anspruch 14, dadurch gekennzeichnet, daß das Material ein Fasermaterial aus einem Celluloseester, einem synthetischem Polyamid oder einem Polyester ist.

17. Verfahren zum Färben (einschließlich Bedrucken) von hydroxy- und/oder carbonamidgruppenhaltigem hydrophilen Fasermaterial, bei welchem man einen Farbstoff auf das Material aus wäßriger Lösung aufbringt und ihn mit Hilfe eines alkalisch wirkenden Mittels fixiert, dadurch gekennzeichnet, daß man als Farbstoff eine Verbindung entsprechend der in Anspruch 1 genannten und definierten allgemeinen Formel (1) einsetzt.

18. Verfahren zum Färben von hydrophobem synthetischen Fasermaterial, bevorzugt unmodifiziertem oder

modifiziertem Polyesterfasermaterial, dadurch gekennzeichnet, daß man das Fasermaterial in einer wäßrigen Lösung einer Verbindung entsprechend der in Anspruch 1 genannten und definierten allgemeinen Formel (1) in Gegenwart eines säurebindenden Mittels einer Hitzebehandlung unterwirft.

**19.** Verfahren zum Färben (einschließlich Bedrucken) von hydrophobem synthetischem Fasermaterial, bevorzugt unmodifiziertem und modifiziertem Polyesterfasermaterial, dadurch gekennzeichnet, daß man eine Azoverbindung entsprechend der allgemeinen Formel (1) von Anspruch 1 aus wäßriger Lösung oder mittels einer wäßrigen Druckpaste in Gegenwart eines säurebindenden Mittels auf das Material aufbringt, das Material anschließend trocknet und sodann einer Hitzebehandlung unterwirft (thermosoliert).

**20.** Verfahren zum Färben (einschließlich Bedrucken) von Mischgewebe, insbesondere von Polyesterfaser-/Baumwolle-Mischgewebe, dadurch gekennzeichnet, daß man eine Azoverbindung entsprechend der allgemeinen Formel (1) von Anspruch 1 aus wäßriger Lösung oder mittels einer wäßrigen Druckpaste auf das Material appliziert, mit einem säurebindenden Mittel in einer geeigneten Zubereitung überklotzt oder überdruckt und anschließend thermosoliert.

Patentansprüche für folgenden Vertragsstaat: ES

**1.** Verfahren zur Herstellung einer Azoverbindung, die der allgemeinen Formel (1)

$$(Y - SO_2)_n - \overset{\overset{(CN)_m}{|}}{D} - N = N - K \qquad (1)$$

entspricht, in welcher

- m für die Zahl 1 oder 2 steht, wobei die Cyangruppen in ortho-Stellung zur Azogruppe an D gebunden sind,
- n die Zahl 1 oder 2 bedeutet,
- Y eine ß-Sulfatoethyl-Gruppe ist,
- D einen gegebenenfalls zusätzlich substituierten, ansonsten von anionischen Gruppen freien Rest einer Diazokomponente der Benzolreihe bedeutet und
- K einen gegebenenfalls zusätzlich substituierten, ansonsten von anionischen Gruppen freien Rest einer Kupplungskomponente bedeutet,

dadurch gekennzeichnet, daß man eine Azoverbindung der allgemeinen Formel (2)

$$(Y\text{-}SO_2)_n - \overset{\overset{(Hal)_m}{|}}{D} - N = N - K \qquad (2)$$

in welcher Y, m, n, D und K die oben genannten Bedeutungen haben und Hal ein Halogenatom ist, das an D in den ortho-Stellungen zur Azogruppe gebunden steht, in einem flüssigen Reaktionsmedium mit Kupfer(I)-cyanid oder einer Kupfercyanokomplexverbindung und in Abwesenheit oder in Gegenwart eines Katalysators umsetzt.

**2.** Verfahren nach Anspruch 1 dadurch gekennzeichnet, daß die Kupplungskomponente ein Rest der Anilin-Reihe ist.

**3.** Verfahren nach Ansprach 1 oder 2, dadurch gekennzeichnet, daß die gegebenenfalls zusätzlichen Substituenten in D und K aus der Menge der folgenden Substituenten ausgewählt sind:
Halogen, Alkyl von 1 bis 4 C-Atomen, substituiertes Alkyl von 1 bis 4 C-Atomen, Aryl, Alkoxy von 1 bis 4 C-Atomen, Nitro, Cyan, Trifluoralkyl von 1 bis 4 C-Atomen, Arylsulfonyl, Alkylsulfonyl von 1 bis 4 C-Atomen, Alkanoyloxy von 2 bis 5 C-Atomen, Aroyloxy, Alkanoylamino von 2 bis 5 C-Atomen, Aroylamino, Amino, durch gegebenenfalls substituiertes Alkyl von 1 bis 4 C-Atomen, Alkenyl von 2 bis 6 C-Atomen, Cycloalkyl und/oder Aryl substituiertes Amino, Carbalkoxy von 2 bis 5 C-Atomen, Carbamoyl, durch gegebenenfalls substituiertes Alkyl von 1 bis 4 C-Atomen, Cycloalkyl und/oder Aryl substituiertes Carbamoyl, Sulfamoyl und durch gegebenenfalls substituiertes Alkyl von 1 bis 4 C-Atomen, Cycloalkyl und/oder Aryl substituiertes Sulfamoyl, wobei in den vorgenannten Substituenten deren Arylreste noch durch nicht-ionische Substituenten substituiert sein können.

4. Verfahren nach Ansprach 1 oder 2, dadurch gekennzeichnet, daß die gegebenenfalls zusätzlichen Substituenten in D Alkylgruppen von 1 bis 4 C-Atomen, Alkoxygruppen von 1 bis 4 C-Atomen, Halogenatome, Trifluormethylgruppen, Alkylsulfonylgruppen von 1 bis 4 C-Atomen und Nitrogruppen sind und die gegebenenfalls zusätzlichen Substituenten in K Substituenten sind, die aus der Menge der Substituenten Alkylgruppen von 1 bis 4 C-Atomen, Alkoxygruppen von 1 bis 4 C-Atomen, Alkanoylaminogruppen von 2 bis 5 C-Atomen, Benzoylaminogruppen, Alkoxyalkoxygruppen mit Alkyl- bzw. Alkylengruppen von jeweils 1 bis 4 C-Atomen, Chlor- und Bromatome, Aminogruppen und durch Alkyl von 1 bis 4 C-Atomen, Cycloalkyl von 5 bis 8 C-Atomen, Alkenyl von 2 bis 4 C-Atomen und/oder Phenyl subtituierte Aminogruppen ausgewählt sind, wobei die Alkylreste in diesen substituierten Aminogruppen noch jeweils durch eine Cyangruppe, Hydroxygruppe, Alkanoyloxygruppe von 2 bis 5 C-Atomen, Carbalkoxygruppe von 2 bis 5 C-Atomen oder Phenylgruppe substituiert sein können.

5. Verfahren nach Anspruch 1, dadurch gekennzeichnet, daß D einen Benzolrest, bedeutet, wobei D außer einer oder zwei Cyangruppen und einer oder zwei Gruppen der allgemeinen Formel $-SO_2-Y$ noch durch Substituenten aus der Menge der Substituenten Alkyl von 1 bis 4 C-Atomen, Alkoxy von 1 bis 4 C-Atomen, Halogen, Trifluormethyl, Alkylsulfonyl von 1 bis 4 C-Atomen und Nitro substituiert sein kann, und K einen Benzolrest bedeutet, der, bevorzugt in para-Stellung zur Azogruppe, durch eine Aminogruppe oder durch eine durch Alkyl von 1 bis 4 C-Atomen, Cycloalkyl von 5 bis 8 C-Atomen, Alkenyl von 2 bis 4 C-Atomen und/oder Phenyl substituierte Aminogruppe substituiert ist, wobei die Alkylreste in diesen substituierten Aminogruppen noch jeweils durch eine Cyangruppe, Hydroxygruppe, Alkanoyloxygruppe von 2 bis 5 C-Atomen, Carbalkoxygruppe von 2 bis 5 C-Atomen oder Phenylgruppe substituiert sein können, und K gegebenenfalls zusätzlich durch Substituenten aus der Menge der Substituenten Alkyl von 1 bis 4 C-Atomen, Alkoxy von 1 bis 4 C-Atomen, Alkanoylamino von 2 bis 5 C-Atomen, Benzoylamino, Alkoxyalkoxy mit Alkyl und Alkylen von jeweils 1 bis 4 C-Atomen, Chlor und Brom substituiert sein können.

6. Verfahren nach einem oder mehreren der Ansprüche 1 bis 5, dadurch gekennzeichnet, daß n für die Zahl 1 steht.

7. Verfahren nach Anspruch 1 oder 2, dadurch gekennzeichnet, daß die Verbindung der Formel (1) eine Azoverbindung entsprechend der allgemeinen Formel (1a)

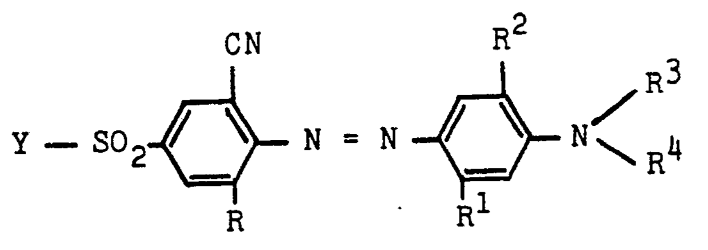

(1a)

ist, in welcher

- Y $\beta$-Sulfatoethyl ist,
- R Wasserstoff, Alkyl von 1 bis 4 C-Atomen, Alkoxy von 1 bis 4 C-Atomen, Trifluormethyl, Alkylsulfonyl von 1 bis 4 C-Atomen, Nitro oder Cyano ist,
- $R^1$ Wasserstoff, Alkyl von 1 bis 4 C-Atomen, Alkoxy von 1 bis 4 C-Atomen, Alkanoylamino von 2 bis 5 C-Atomen oder Benzoylamino ist,
- $R^2$ Wasserstoff, Alkyl von 1 bis 4 C-Atomen, Alkoxy von 1 bis 4 C-Atomen, durch Alkoxy von 1 bis 4 C-Atomen substituiertes Alkoxy von 2 bis 4 C-Atomen, Chlor oder Brom ist,
- $R^3$ Wasserstoff, Alkyl von 1 bis 4 C-Atomen, durch Cyano, Hydroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen ist und

$R^4$ Wasserstoff, Alkyl von 1 bis 4 C-Atomen, durch Cyano, Hydroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen, Cyclohexyl, Phenyl oder Benzyl ist.

**8.** Verfahren nach Anspruch 1, dadurch gekennzeichnet, daß die Verbindung der Formel (1) eine Azoverbindung entsprechend der allgemeinen Formel (1b)

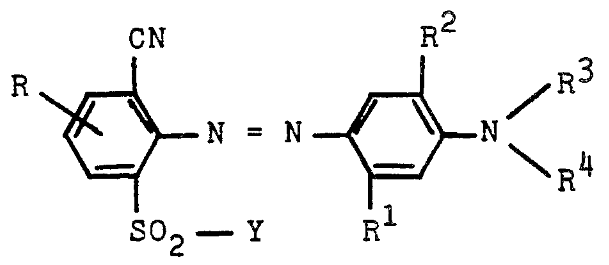

(1b)

ist, in welcher

Y $\beta$-Sulfatoethyl ist,

R Wasserstoff, Alkyl von 1 bis 4 C-Atomen, Alkoxy von 1 bis 4 C-Atomen, Trifluormethyl, Alkylsulfonyl von 1 bis 4 C-Atomen, Nitro oder Cyano ist,

$R^1$ Wasserstoff, Alkyl von 1 bis 4 C-Atomen, Alkoxy von 1 bis 4 C-Atomen, Alkanoylamino von 2 bis 5 C-Atomen oder Benzoylamino ist,

$R^2$ Wasserstoff, Alkyl von 1 bis 4 C-Atomen, Alkoxy von 1 bis 4 C-Atomen, durch Alkoxy von 1 bis 4 C-Atomen substituiertes Alkoxy von 2 bis 4 C-Atomen, Chlor oder Brom ist,

$R^3$ Wasserstoff, Alkyl von 1 bis 4 C-Atomen, durch Cyano, Hydroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen ist und

$R^4$ Wasserstoff, Alkyl von 1 bis 4 C-Atomen, durch Cyano, Hydroxy, Carbalkoxy von 2 bis 5 C-Atomen oder Alkanoyloxy von 2 bis 5 C-Atomen substituiertes Alkyl von 2 bis 4 C-Atomen oder Alkenyl von 2 bis 4 C-Atomen, Cyclohexyl, Phenyl oder Benzyl ist.

**9.** Verfahren nach Anspruch 1, dadurch gekennzeichnet, daß die Verbindung der Formel (1) eine Azoverbindung der Formel

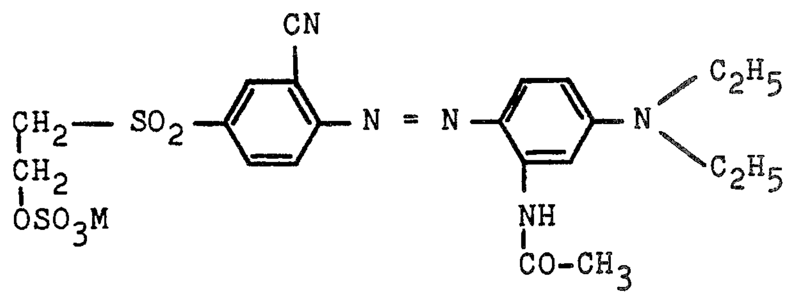

ist, in welcher M für ein Wasserstoffatom oder bevorzugt ein Alkalimetall steht.

**10.** Verfahren nach Anspruch 1, dadurch gekennzeichnet, daß die Verbindung der Formel (1) eine Azoverbindung der Formel

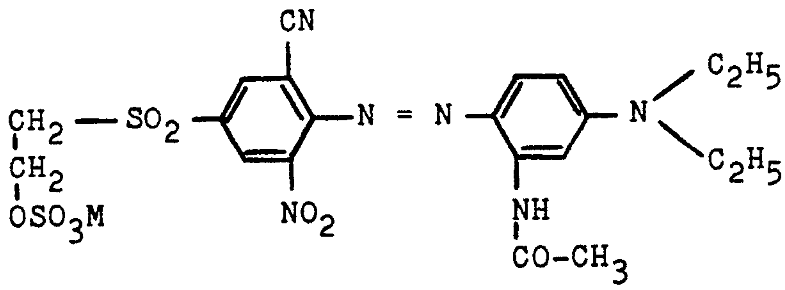

ist, in welcher M für ein Wasserstoffatom oder bevorzugt ein Alkalimetall steht.

**11.** Verfahren nach Anspruch 1, dadurch gekennzeichnet, daß die Verbindung der Formel (1) eine Azoverbindung der Formel

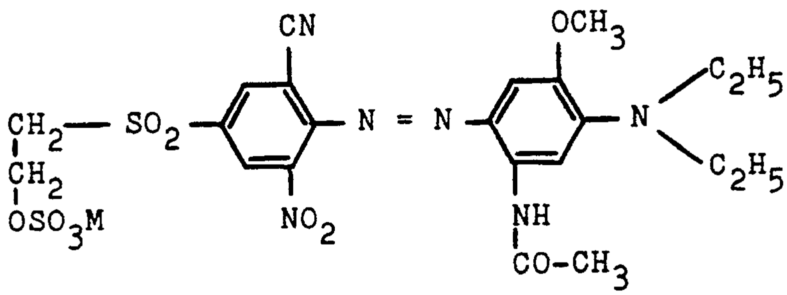

ist, in welcher M für ein Wasserstoffatom oder bevorzugt ein Alkalimetall steht.

**12.** Verformen nach Anspruch 1, dadurch gekennzeichnet, daß die Verbindung der Formel (1) eine Azoverbindung der Formel

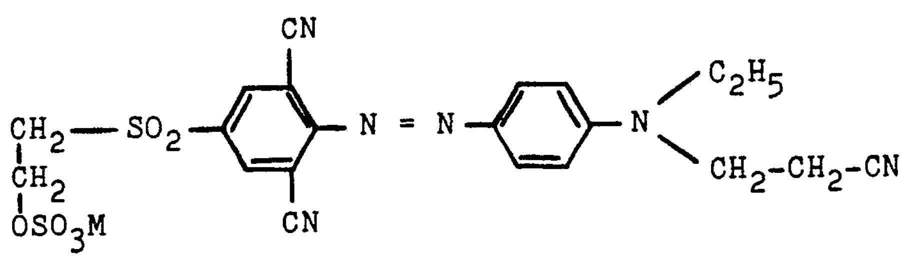

ist, in welcher M für ein Wasserstoffatom oder bevorzugt ein Alkalimetall steht.

**13.** Verwendung einer Azoverbindung entsprechend der in Anspruch 1 genannten und definierten allgemeinen Formel (1) zum Färben von hydrophilen oder hydrophoben Materialien, insbesondere Fasermaterialien, oder Gemischen solcher Materialien.

**14.** Verwendung nach Anspruch 13, dadurch gekennzeichnet, daß das Material ein Cellulosefasermaterial oder Wolle ist.

**15.** Verwendung nach Anspruch 13, dadurch gekennzeichnet, daß das Material ein Fasermaterial aus einem Celluloseester, einem synthetischem Polyamid oder einem Polyester ist.

**16.** Verfahren zum Färben (einschließlich Bedrucken) von hydroxy- und/oder carbonamidgruppenhaltigem hydrophilen Fasermaterial, bei welchem man einen Farbstoff auf das Material aus wäßriger Lösung aufbringt und ihn mit Hilfe eines alkalisch wirkenden Mittels fixiert, dadurch gekennzeichnet, daß man als Farbstoff eine Verbindung entsprechend der in Anspruch 1 genannten und definierten allgemeinen Formel (1) einsetzt.

**17.** Verfahren zum Färben von hydrophobem synthetischen Fasermaterial, bevorzugt unmodifiziertem oder modifiziertem Polyesterfasermaterial, dadurch gekennzeichnet, daß man das Fasermaterial in einer wäßrigen Lösung einer Verbindung der in Anspruch 1 genannten und definierten allgemeinen Formel (1) in Gegenwart eines säurebindenden Mittels einer Hitzebehandlung unterwirft.

**18.** Verfahren zum Färben (einschließlich Bedrucken) von hydrophobem synthetischem Fasermaterial, bevorzugt unmodifiziertem und modifiziertem Polyesterfasermaterial, dadurch gekennzeichnet, daß man eine Azoverbindung entsprechend der allgemeinen Formel (1) von Anspruch 1 aus wäßriger Lösung oder mittels einer wäßrigen Druckpaste in Gegenwart eines säurebindenden Mittels auf das Material aufbringt, das Material anschließend trocknet und sodann einer Hitzebehandlung unterwirft (thermosoliert).

**19.** Verfahren zum Färben (einschließlich Bedrucken) von Mischgewebe, insbesondere von Polyesterfaser-/Baumwolle-Mischgewebe, dadurch gekennzeichnet, daß man eine Azoverbindung entsprechend der allgemeinen Formel (1) von Anspruch 1, in welcher Y für die β-Sulfatoethyl-Gruppe steht, aus wäßriger Lösung oder mittels einer wäßrigen Druckpaste auf das Material appliziert, mit einem säurebindenden Mittel in einer geeigneten Zubereitung überklotzt oder überdruckt und anschließend thermosoliert.

## Claims

**1.** An azo compound corresponding to the formula (1)

$$(Y - SO_2)_n - \underset{}{\overset{(CN)_m}{\overset{|}{D}}} - N = N - K \qquad (1)$$

in which

- m represents the number 1 or 2, the cyano group being attached to D in the ortho-position relative to the azo group,
- n denotes the number 1 or 2,
- Y is a β-sulfatoethyl group,
- D denotes a radical of a diazo component of the benzene series which is optionally additionally substituted, but is otherwise free from anionic groups, and
- K denotes a radical of a coupling component which is optionally additionally substituted, but is otherwise free from anionic groups.

**2.** A compound as claimed in claim 1, wherein the coupling component is a radical of the aniline series.

**3.** A compound as claimed in claim 1 or 2, wherein the optional additional substituents in D and K are selected from the substituents group comprising halogen, alkyl having 1 to 4 carbon atoms, substituted alkyl having 1 to 4 carbon atoms, aryl, alkoxy having 1 to 4 carbon atoms, nitro, cyano, trifluoroalkyl having 1 to 4 carbon atoms, arylsulfonyl, alkylsulfonyl having 1 to 4 carbon atoms, alkanoyloxy having 2 to 5 carbon atoms, aroyloxy, alkanoylamino having 2 to 5 carbon atoms, aroylamino, amino, amino which is substituted by optionally substituted alkyl having 1 to 4 carbon atoms, alkenyl having 2 to 6 carbon atoms, cycloalkyl and/or aryl, carboalkoxy having 2 to 5 carbon atoms, carbamoyl, carbamoyl which is substituted by optionally substituted alkyl having 1 to 4 carbon atoms, cycloalkyl and/or aryl, sulfamoyl and sulfamoyl which is substituted by optionally substituted alkyl having 1 to 4 carbon atoms, cycloalkyl and/or aryl, it being possible for the aryl radicals in the abovementioned substituents also to be substituted by nonionic substituents.

**4.** A compound as claimed in claim 1 or 2, wherein the optional additional substituents in D are alkyl groups having 1 to 4 carbon atoms, alkoxy groups having 1 to 4 carbon atoms, halogen atoms, trifluoromethyl groups, alkylsulfonyl groups having 1 to 4 carbon atoms and nitro groups, and the optional additional substituents in K are substituents selected from the substituents group comprising alkyl groups having 1 to 4 carbon atoms, alkoxy groups having 1 to 4 carbon atoms, alkanoylamino

groups having 2 to 5 carbon atoms, benzoylamino groups, alkoxy-alkoxy groups containing alkyl or alkylene groups each having 1 to 4 carbon atoms, chlorine and bromine atoms, amino groups and amino groups which are substituted by alkyl having 1 to 4 carbon atoms, cycloalkyl having 5 to 8 carbon atoms, alkenyl having 2 to 4 carbon atoms and/or phenyl, it being possible for the alkyl radicals in these substituted amino groups also to be substituted in each case by a cyano group, hydroxyl group, alkanoyloxy group having 2 to 5 carbon atoms, carboalkoxy group having 2 to 5 carbon atoms or phenyl group.

**5.** A compound as claimed in claim 1, wherein D denotes a benzene radical, it being possible for D to be substituted not only by one or two cyano groups and one or two groups of the formula $-SO_2-Y$, but also by substituents belonging to the substituents group comprising alkyl having 1 to 4 carbon atoms, alkoxy having 1 to 4 carbon atoms, halogen, trifluoromethyl, alkylsulfonyl having 1 to 4 carbon atoms and nitro, and K denotes a benzene radical which is substituted, preferably in the para-position relative to the azo group, by an amino group, or by an amino group which is substituted by alkyl having 1 to 4 carbon atoms, cycloalkyl having 5 to 8 carbon atoms, alkenyl having 2 to 4 carbon atoms and/or phenyl, it being possible for the alkyl radicals in these substituted amino groups also to be substituted in each case by a cyano group, hydroxyl group, alkanoyloxy group having 2 to 5 carbon atoms, carboalkoxy group having 2 to 5 carbon atoms or phenyl group, and K can, if appropriate, be additionally substituted by substituents belonging to the substituents group comprising alkyl having 1 to 4 carbon atoms, alkoxy having 1 to 4 carbon atoms, alkanoylamino having 2 to 5 carbon atoms, benzoylamino, alkoxyalkoxy containing alkyl and alkylene having in each case 1 to 4 carbon atoms, chlorine and bromine.

**6.** A compound as claimed in one or more of claims 1 to 5, wherein n represents the number 1.

**7.** A compound as claimed in claim 1 corresponding to the formula (1a)

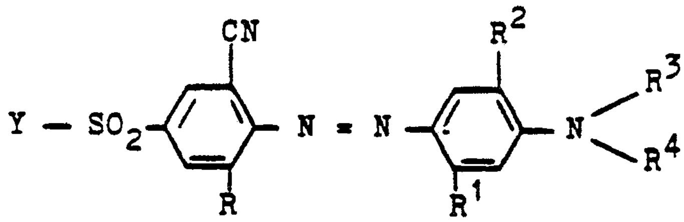

(1a)

in which

- Y is ß-sulfatoethyl,
- R is hydrogen, alkyl having 1 to 4 carbon atoms, alkoxy having 1 to 4 carbon atoms, trifluoromethyl, alkylsulfonyl having 1 to 4 carbon atoms, nitro or cyano,
- $R^1$ is hydrogen, alkyl having 1 to 4 carbon atoms, alkoxy having 1 to 4 carbon atoms, alkanoylamino having 2 to 5 carbon atoms or benzoylamino,
- $R^2$ is hydrogen, alkyl having 1 to 4 carbon atoms, alkoxy having 1 to 4 carbon atoms, alkoxy which has 2 to 4 carbon atoms and is substituted by alkoxy having 1 to 4 carbon atoms, chlorine or bromine,
- $R^3$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or is alkenyl having 2 to 4 carbon atoms, and
- $R^4$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or alkenyl having 2 to 4 carbon atoms, cyclohexyl, phenyl or benzyl.

**8.** A compound as claimed in claim 1, corresponding to the formula (1b)

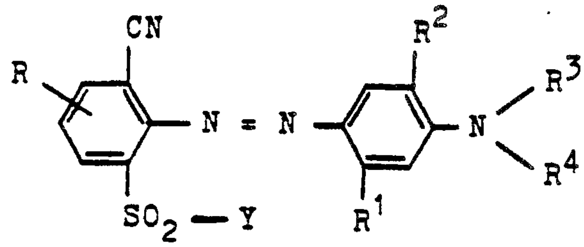

(1b)

in which

- Y is ß-sulfatoethyl,
- R is hydrogen, alkyl having 1 to 4 carbon atoms, alkoxy having 1 to 4 carbon atoms, trifluoromethyl, alkylsulfonyl having 1 to 4 carbon atoms, nitro or cyano,
- $R^1$ is hydrogen, alkyl having 1 to 4 carbon atoms, alkoxy having 1 to 4 carbon atoms, alkanoylamino having 2 to 5 carbon atoms or benzoylamino,
- $R^2$ is hydrogen, alkyl having 1 to 4 carbon atoms, alkoxy having 1 to 4 carbon atoms, alkoxy which has 2 to 4 carbon atoms and is substituted by alkoxy having 1 to 4 carbon atoms, chlorine or bromine,
- $R^3$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or alkenyl having 2 to 4 carbon atoms, and
- $R^4$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or alkenyl having 2 to 4 carbon atoms, cyclohexyl, phenyl or benzyl.

**9.** A compound as claimed in claim 1 of the formula

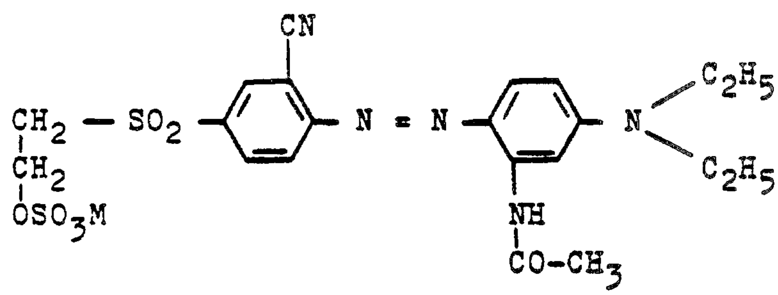

in which M represents a hydrogen atom or, preferably, an alkali metal.

**10.** A compound as claimed in claim 1 of the formula

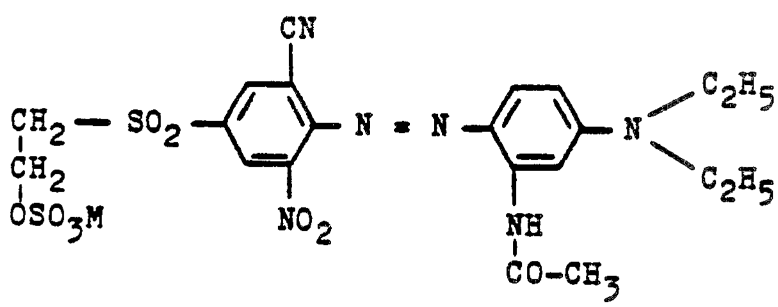

in which M represents a hydrogen atom or, preferably, an alkali metal.

**11.** A compound as claimed in claim 1 of the formula

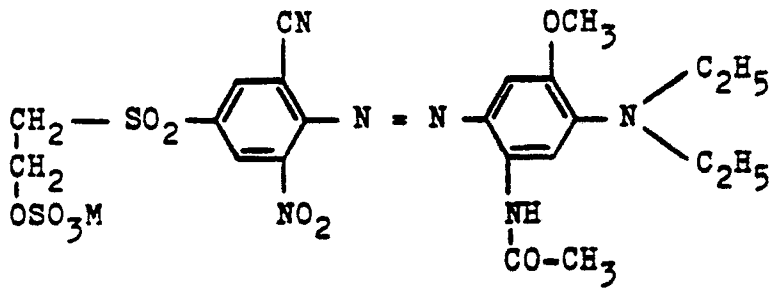

in which M represents a hydrogen atom or, preferably, an alkali metal.

**12.** A compound as claimed in claim 1 of the formula

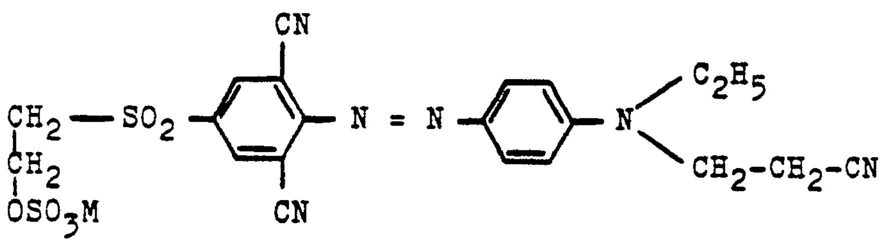

in which M represents a hydrogen atom or, preferably, an alkali metal.

**13.** A process for the preparation of an azo compound, mentioned and defined in claim 1, of the formula (1), which comprises reacting an azo compound of the formula (2)

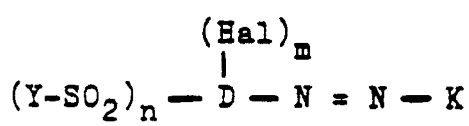

(2)

in which Y, m, n, D and K have the meanings mentioned in claim 1 and Hal is a halogen atom attached to D in the ortho-positions relative to the azo group, in a liquid reaction medium with copper (I) cyanide or a copper cyano complex compound and in the absence or presence of a catalyst.

**14.** The use of an azo compound of the formula (1) mentioned and defined in claim 1, for dyeing hydrophilic or hydrophobic materials, in particular fiber materials, or mixtures of such materials.

**15.** The use as claimed in claim 14, wherein the material is a cellulose fiber material or wool.

**16.** The use as claimed in claim 14, wherein the material is a fiber material composed of a cellulose ester, a synthetic polyamide or a polyester.

**17.** A process for dyeing (including printing) hydrophilic fiber material containing hydroxyl and/or carboxamide groups in which a dyestuff is applied to the material from an aqueous solution and is fixed by means of an agent having an alkaline reaction, wherein the dyestuff employed is a compound of the formula (1) mentioned and defined in claim 1.

**18.** A process for dyeing hydrophobic synthetic fiber material, preferably unmodified or modified polyester fiber material, wherein the fiber material is subjected to a heat treatment in an aqueous solution of a compound of the formula (1) mentioned and defined in claim 1, in the presence of an acid-binding agent.

**19.** A process for dyeing (including printing) hydrophobic synthetic fiber material, preferably unmodified or modified polyester fiber material, wherein an azo compound of the formula (1) of claim 1 is applied to the material, in the presence of an acid-binding agent, from an aqueous solution or by means of an aqueous printing paste, and the material is subsequently dried and then subjected to a heat treatment (thermosol treatment).

**20.** A process for dyeing (including printing) mixed fabrics, especially polyester fiber/cotton mixed fabrics, wherein an azo compound of the formula (1) of claim 1 is applied to the material from an aqueous solution or by means of an aqueous printing paste, and the material is over-padded or over-printed with an acid-binding agent in a suitable preparation and is then subjected to thermosol treatment.

Claims for the following Contracting State: ES

**1.** A process for the preparation of an azo compound corresponding to the formula (1)

$$(Y-SO_2)_n-\overset{(CN)_m}{\overset{|}{D}}-N=N-K \qquad (1)$$

in which

- m represents the number 1 or 2, the cyano groups being attached to D in the ortho-position relative to the azo group,
- n denotes the number 1 or 2,
- Y is a $\beta$-sulfatoethyl group,
- D denotes a radical of a diazo component of the benzene series which is optionally additionally substituted, but is otherwise free from anionic groups, and
- K denotes a radical of a coupling component which is optionally additionally substituted, but is otherwise free from anionic groups,

which comprises reacting an azo compound of the formula (2)

$$(Y-SO_2)_n-\overset{(Hal)_m}{\overset{|}{D}}-N=N-K \qquad (2)$$

in which Y, m, n, D and K have the meanings mentioned above and Hal is a halogen atom attached to D in the ortho-positions relative to the azo group, in a liquid reaction medium with copper (I) cyanide or a copper cyano complex compound and in the absence or presence of a catalyst.

**2.** The process as claimed in claim 1, wherein the coupling component is a radical of the aniline series.

**3.** The process as claimed in claim 1 or 2, wherein the optional additional substituents in D and K are selected from a group of substituents comprising halogen, alkyl having 1 to 4 carbon atoms, substituted alkyl having 1 to 4 carbon atoms, aryl, alkoxy having 1 to 4 carbon atoms, nitro, cyano, trifluoroalkyl having 1 to 4 carbon atoms, arylsulfonyl, alkylsulfonyl having 1 to 4 carbon atoms, alkanoyloxy having 2 to 5 carbon atoms, aroyloxy, alkanoylamino having 2 to 5 carbon atoms, aroylamino, amino, amino which is substituted by optionally substituted alkyl having 1 to 4 carbon atoms, alkenyl having 2 to 6 carbon atoms, cycloalkyl and/or aryl, carboalkoxy having 2 to 5 carbon atoms, carbamoyl, carbamoyl which is substituted by optionally substituted alkyl having 1 to 4 carbon atoms, cycloalkyl and/or aryl, sulfamoyl and sulfamoyl which is substituted by optionally substituted alkyl having 1 to 4 carbon atoms, cycloalkyl and/or aryl, it being possible for the aryl radicals in the abovementioned substituents also to be substituted by nonionic substituents.

**4.** The process as claimed in claim 1 or 2, wherein the additional substituents in D, if present, are alkyl

groups having 1 to 4 carbon atoms, alkoxy groups having 1 to 4 carbon atoms, halogen atoms, trifluoromethyl groups, alkylsulfonyl groups having 1 to 4 carbon atoms and nitro groups, and the additional substituents in K, if present, are substituents selected from the substituents group comprising alkyl groups having 1 to 4 carbon atoms, alkoxy groups having 1 to 4 carbon atoms, alkanoylamino groups having 2 to 5 carbon atoms, benzoylamino groups, alkoxyalkoxy groups containing alkyl or alkylene groups having in each case 1 to 4 carbon atoms, chlorine and bromine atoms, amino groups and amino groups which are substituted by alkyl having 1 to 4 carbon atoms, cycloalkyl having 5 to 8 carbon atoms, alkenyl having 2 to 4 carbon atoms and/or phenyl, it being possible for the alkyl radicals in these substituted amino groups also to be substituted in each case by a cyano group, hydroxyl group, alkanoyloxy group having 2 to 5 carbon atoms, carboalkoxy group having 2 to 5 carbon atoms or phenyl group.

**5.** The process as claimed in claim 1, wherein D denotes a benzene radical, it being possible for D to be substituted not only by one or two cyano groups and one or two groups of the formula $-SO_2-Y$, but also by substituents belonging to the substituents group comprising alkyl having 1 to 4 carbon atoms, alkoxy having 1 to 4 carbon atoms, halogen, trifluoromethyl, alkylsulfonyl having 1 to 4 carbon atoms and nitro, and K denotes a benzene radical which is substituted, preferably in the para-position relative to the azo group, by an amino group, or by an amino group which is substituted by alkyl having 1 to 4 carbon atoms, cycloalkyl having 5 to 8 carbon atoms, alkenyl having 2 to 4 carbon atoms and/or phenyl, it being possible for the alkyl radicals in these substituted amino groups also to be substituted in each case by a cyano group, hydroxyl group, alkanoyloxy group having 2 to 5 carbon atoms, carboalkoxy group having 2 to 5 carbon atoms or phenyl group, and K can, if appropriate, be additionally substituted by substituents belonging to the substituents group comprising alkyl having 1 to 4 carbon atoms, alkoxy having 1 to 4 carbon atoms, alkanoylamino having 2 to 5 carbon atoms, benzoylamino, alkoxyalkoxy containing alkyl and alkylene having in each case 1 to 4 carbon atoms, chlorine and bromine.

**6.** The process as claimed in one or more of claims 1 to 5, wherein n represents the number 1.

**7.** The process as claimed in claim 1 or 2, wherein the compound of the formula (1) is an azo compound corresponding to the formula (1a)

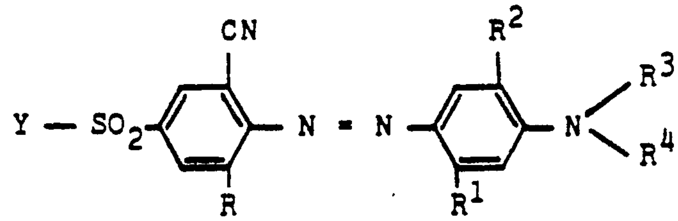

(1a)

in which

- Y is $\beta$-sulfatoethyl,
- R is hydrogen, alkyl having 1 to 4 carbon atoms, alkoxy having 1 to 4 carbon atoms, trifluoromethyl, alkylsulfonyl having 1 to 4 carbon atoms, nitro or cyano,
- $R^1$ is hydrogen, alkyl having 1 to 4 carbon atoms, alkoxy having 1 to 4 carbon atoms, alkanoylamino having 2 to 5 carbon atoms or benzoylamino,
- $R^2$ is hydrogen, alkyl having 1 to 4 carbon atoms, alkoxy having 1 to 4 carbon atoms, alkoxy which has 2 to 4 carbon atoms and is substituted by alkoxy having 1 to 4 carbon atoms, chlorine or bromine,
- $R^3$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or alkenyl having 2 to 4 carbon atoms, and
- $R^4$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or alkenyl having 2 to 4 carbon atoms, cyclohexyl, phenyl or benzyl.

**8.** The process as claimed in claim 1, wherein the compound of the formula (1) is an azo compound corresponding to the formula (1b)

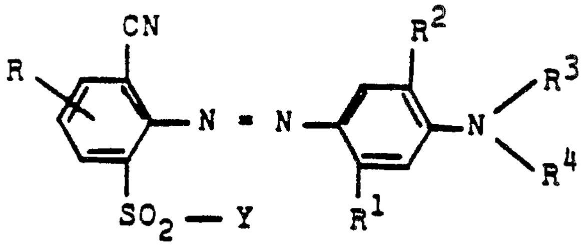

(1b)

in which

- Y is $\beta$-sulfatoethyl,
- R is hydrogen, alkyl having 1 to 4 carbon atoms, alkoxy having 1 to 4 carbon atoms, trifluoromethyl, alkylsulfonyl having 1 to 4 carbon atoms, nitro or cyano,
- $R^1$ is hydrogen, alkyl having 1 to 4 carbon atoms, alkoxy having 1 to 4 carbon atoms, alkanoylamino having 2 to 5 carbon atoms or benzoylamino,
- $R^2$ is hydrogen, alkyl having 1 to 4 carbon atoms, alkoxy having 1 to 4 carbon atoms, alkoxy which has 2 to 4 carbon atoms and is substituted by alkoxy having 1 to 4 carbon atoms, chlorine or bromine,
- $R^3$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or alkenyl having 2 to 4 carbon atoms, and
- $R^4$ is hydrogen, alkyl having 1 to 4 carbon atoms, alkyl which has 2 to 4 carbon atoms and is substituted by cyano, hydroxyl, carboalkoxy having 2 to 5 carbon atoms or alkanoyloxy having 2 to 5 carbon atoms, or alkenyl having 2 to 4 carbon atoms, cyclohexyl, phenyl or benzyl.

**9.** The process as claimed in claim 1, wherein the compound of the formula (1) is an azo compound of the formula

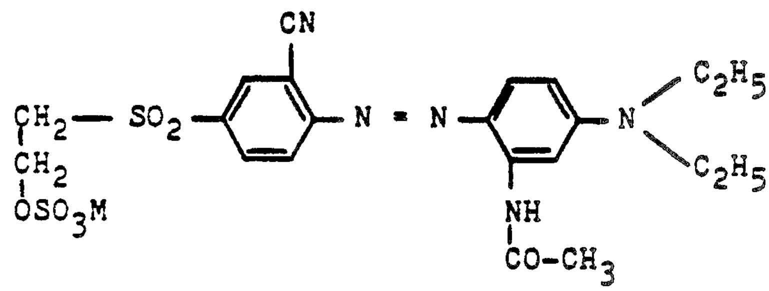

in which M represents a hydrogen atom or preferably an alkali metal.

**10.** The process as claimed in claim 1, wherein the compound of the formula (1) is an azo compound of the formula

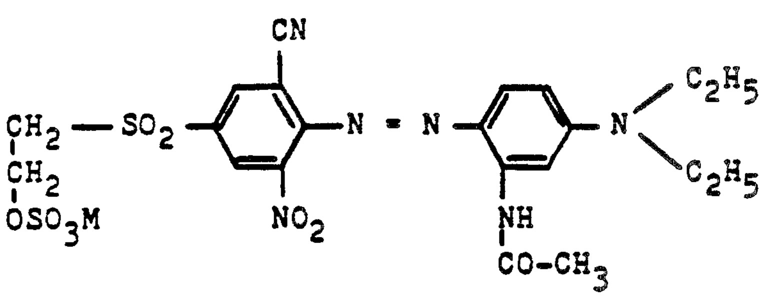

in which M represents a hydrogen atom or preferably an alkali metal.

11. The process as claimed in claim 1, wherein the compound of the formula (1) is an azo compound of the formula

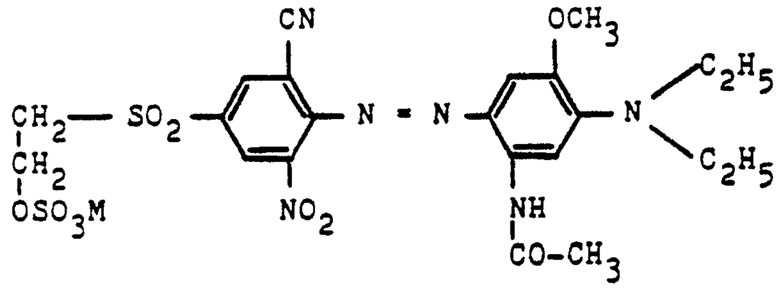

in which M represents a hydrogen atom or preferably an alkali metal.

12. The process as claimed in claim 1, wherein the compound of the formula (1) is an azo compound of the formula

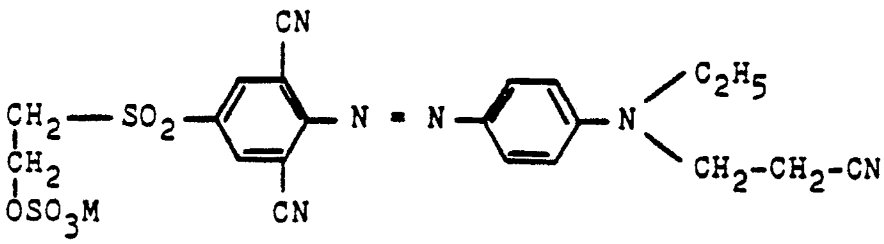

in which M represents a hydrogen atom or preferably an alkali metal.

13. The use of an azo compound of the formula (1) mentioned and defined in claim 1, for dyeing hydrophilic or hydrophobic materials, in particular fiber materials, or mixtures of such materials.

14. The use as claimed in claim 13, wherein the material is a cellulose fiber material or wool.

15. The use as claimed in claim 13, wherein the material is a fiber material composed of a cellulose ester, a synthetic polyamide or a polyester.

16. A process for dyeing (including printing) hydrophilic fiber material containing hydroxyl and/or carboxamide groups in which a dyestuff is applied to the material from an aqueous solution and is fixed by means of an agent having an alkaline reaction, wherein the dyestuff employed is a compound of the formula (1) mentioned and defined in claim 1.

17. A process for dyeing hydrophobic synthetic fiber material, preferably unmodified or modified polyester fiber material, wherein the fiber material is subjected to a heat treatment in an aqueous solution of a compound of the formula (1) mentioned and defined in claim 1, in the presence of an acid-binding agent.

18. A process for dyeing (including printing) hydrophobic synthetic fiber material, preferably unmodified or modified polyester fiber material, wherein an azo compound of the formula (1) of claim 1 is applied to the material, in the presence of an acid-binding agent, from an aqueous solution or by means of an aqueous printing paste, and the material is subsequently dried and then subjected to a heat treatment (thermosol treatment).

19. A process for dyeing (including printing) mixed fabrics, especially polyester fiber/cotton mixed fabrics, wherein an azo compound of the formula (1) of claim 1 in which Y represents the $\beta$-sulfatoethyl group is applied to the material from an aqueous solution or by means of an aqueous printing paste, and the material is over-padded or over-printed with an acid-binding agent in a suitable preparation and is then

subjected to thermosol treatment.

## Revendications

1. Composé azoïque, répondant à la formule générale (1)

$$(Y-SO_2)_n-\overset{(CN)_m}{\overset{|}{D}}-N=N-K \qquad (1)$$

(dans laquelle :

m est un nombre valant 1 ou 2, les groupes cyano étant fixés sur D en position ortho par rapport au groupe azoïque,
n est un nombre valant 1 ou 2,
Y représente un groupe sulfato-2 éthyle,
D représente un reste d'un composant diazotable de la série benzénique (éventuellement encore substitué mais dépourvu de groupes anioniques), et
K représente un reste d'un copulant (éventuellement encore substitué mais dépourvu de groupes anioniques).

2. Composé selon la revendication 1, caractérisé en ce que le copulant est un reste de la série de l'aniline.

3. Composé selon la revendication 1 ou 2, caractérisé en ce que les substituants supplémentaires éventuels fixés sur D et K sont choisis parmi les substituants suivants : un atome d'halogène, un groupe alkyle ayant 1 à 4 atomes de carbone, un groupe alkyle substitué ayant 1 à 4 atomes de carbone, un groupe aryle, alcoxy ayant 1 à 4 atomes de carbone, nitro, cyano, trifluorométhyle ayant 1 à 4 atomes de carbone, arylsulfonyle, alkylsulfonyle ayant 1 à 4 atomes de carbone, alcanoyloxy ayant 2 à 5 atomes de carbone, aroyloxy, alcanoylamino ayant 2 à 5 atomes de carbone, aroylamino, amino, amino (éventuellement substitué par un groupe alkyle ayant 1 à 4 atomes de carbone, alcényle ayant 2 à 6 atomes de carbone, cycloalkyle et/ou aryle), carbalcoxy ayant 2 à 5 atomes de carbone, carbamoyle, carbamoyle (éventuellement substitué par un groupe alkyle ayant 1 à 4 atomes de carbone, cycloalkyle et/ou aryle), sulfamoyle et sulfamoyle (éventuellement substitué par un groupe alkyle ayant 1 à 4 atomes de carbone, cycloalkyle et/ou aryle), et, dans les substituants précités, les restes aryles pouvant encore être substitués par des substituants non-ioniques.

4. Composé selon la revendication 1 ou 2, caractérisé en ce que les substituants supplémentaires éventuels fixés sur D sont des groupes alkyles ayant 1 à 4 atomes de carbone, des groupes alcoxy ayant 1 à 4 atomes de carbone, des atomes d'halogène, des groupes trifluorométhyles, des groupes alkylsulfonyles ayant 1 à 4 atomes de carbone, et des groupes nitro, et en ce que les substituants supplémentaires éventuellement fixés sur K sont choisis parmi les substituants suivants : des groupes alkyles ayant 1 à 4 atomes de carbone, des groupes alcoxy ayant 1 à 4 atomes de carbone, des groupes alcanoylamino ayant 2 à 5 atomes de carbone, des groupes benzoylamino, des groupes alcoxyalcoxy dont les groupes alkyles ou alkylènes ont chacun 1 à 4 atomes de carbone, des atomes de chlore et de brome, des groupes amino et des groupes amino (substitués par un groupe alkyle ayant 1 à 4 atomes de carbone, cycloalkyle ayant 5 à 8 atomes de carbone, alcényle ayant 2 à 4 atomes de carbone et/ou phényle), les restes alkyles présents dans ces groupes amino pouvant être encore chacun substitués par un groupe cyano, un groupe hydroxy, un groupe alcanoyloxy ayant 2 à 5 atomes de carbone, un groupe carbalcoxy ayant 2 à 5 atomes de carbone ou un groupe phényle.

5. Composé selon la revendication 1, caractérisé en ce que D représente un reste benzénique, ce reste D pouvant porter, en plus d'un ou deux groupes cyano et d'un ou deux groupes de formule générale $-SO_2-Y$, encore des substituants choisis parmi un groupe alkyle ayant 1 à 4 atomes de carbone, alcoxy ayant 1 à 4 atomes de carbone, halogéno, trifluorométhyle, alkylsulfonyle ayant 1 à 4 atomes de carbone et nitro, et K représente un reste benzénique qui est substitué, de préférence en position para par rapport au groupe azoïque, par un groupe amino ou par un groupe amino (substitué par un groupe alkyle ayant

1 à 4 atomes de carbone, cycloalkyle ayant 5 à 8 atomes de carbone, alcényle ayant 2 à 4 atomes de carbone et/ou phényle), les restes alkyles présents dans ces groupes amino substitués pouvant porter encore chacun comme substituant un groupe cyano, un groupe hydroxy, un groupe alcanoyloxy ayant 2 à 5 atomes de carbone, un groupe carbalcoxy ayant 2 à 5 atomes de carbone ou un groupe phényle, et K pouvant éventuellement être substitué encore par des substituants choisis parmi un reste alkyle ayant 1 à 4 atomes de carbone, alcoxy ayant 1 à 4 atomes de carbone, alcanoylamino ayant 2 à 5 atomes de carbone, benzoylamino, alcoxyalcoxy dont le reste alkyle et le reste alkylène ont chacun 1 à 4 atomes de carbone , un atome de chlore et un atome de brome.

6. Composé selon une ou plusieurs des revendications 1 à 5, caractérisé en ce que n est un nombre valant 1.

7. Composé selon la revendication 1, répondant à la formule générale (1a) :

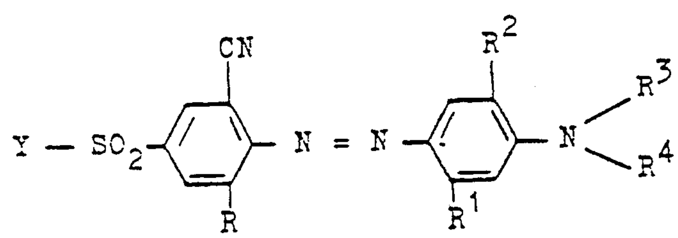

(1a)

dans laquelle :

- Y représente le groupe sulfato-2 éthyle,
- R représente un atome d'hydrogène, un groupe alkyle ayant 1 à 4 atomes de carbone, alcoxy ayant 1 à 4 atomes de carbone, trifluorométhyle, alkylsulfonyle ayant 1 à 4 atomes de carbone, nitro ou cyano,
- $R^1$ représente un atome d'hydrogène, un groupe alkyle ayant 1 à 4 atomes de carbone, alcoxy ayant 1 à 4 atomes de carbone, alcanoylamino ayant 2 à 5 atomes de carbone ou benzoylamino,
- $R^2$ représente un atome d'hydrogène, un groupe alkyle ayant 1 à 4 atomes de carbone, alcoxy ayant 1 à 4 atomes de carbone, alcoxy ayant 2 à 4 atomes de carbone (et lui-même substitué par un groupe alcoxy ayant 1 à 4 atomes de carbone), un atome de chlore ou de brome,
- $R^3$ représente un atome d'hydrogène, un groupe alkyle ayant 1 à 4 atomes de carbone, un groupe alkyle ayant 2 à 4 atomes de carbone (et substitué par un reste cyano, hydroxy, carbalcoxy ayant 2 à 5 atomes de carbone ou alcanoyloxy ayant 2 à 5 atomes de carbone) ou un groupe alcényle ayant 2 à 4 atomes de carbone, et
- $R^4$ représente un atome d'hydrogène, un groupe alkyle ayant 1 à 4 atomes de carbone, un groupe alkyle ayant 2 à 4 atomes de carbone (substitué par un reste cyano, hydroxy, carbalcoxy ayant 2 à 5 atomes de carbone ou alcanoyloxy) ou un groupe alcényle ayant 2 à 4 atomes de carbone, un groupe cyclohexyle, phényle ou benzyle.

8. Composé selon la revendication 1, répondant à la formule générale (1b) :

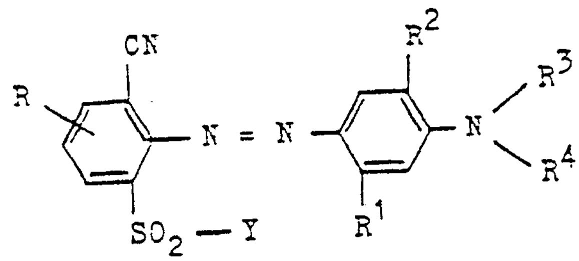

(1b)

dans laquelle :

Y représente le groupe sulfato-2 éthyle,

R représente un atome d'hydrogène, un groupe alkyle.ayant 1 à 4 atomes de carbone, alcoxy ayant 1 à 4 atomes de carbone, trifluorométhyle, alkylsulfonyle ayant 1 à 4 atomes de carbone, nitro ou cyano,

$R^1$ représente un atome d'hydrogène, un groupe alkyle ayant 1 à 4 atomes de carbone, alcoxy ayant 1 à 4 atomes de carbone, alcanoylamino ayant 2 à 5 atomes de carbone ou benzoylamino,

$R^2$ représente un atome d'hydrogène, un groupe alkyle ayant 1 à 4 atomes de carbone, alcoxy ayant 1 à 4 atomes de carbone, alcoxy ayant 2 à 4 atomes de carbone (et lui-même substitué par un groupe alcoxy ayant 1 à 4 atomes de carbone), un atome de chlore ou de brome,

$R^3$ représente un atome d'hydrogène, un groupe alkyle ayant 1 à 4 atomes de carbone, un groupe alkyle ayant 2 à 4 atomes de carbone (et substitué par un reste cyano, hydroxy carbalcoxy ayant 2 à 5 atomes de carbone ou alcanoyloxy ayant 2 à 5 atomes de carbone), ou un groupe alcényle ayant 2 à 4 atomes de carbone, et

$R^4$ représente un atome d'hydrogène, un groupe alkyle ayant 1 à 4 atomes de carbone, un groupe alkyle ayant 2 à 4 atomes de carbone (substitué par un reste cyano, hydroxy, carbalcoxy ayant 2 à 5 atomes de carbone ou alcanoyloxy) ou un groupe alcényle ayant 2 à 4 atomes de carbone, un groupe cyclohexyle, phényle ou benzyle.

**9.** Composé selon la revendication 1, de formule :

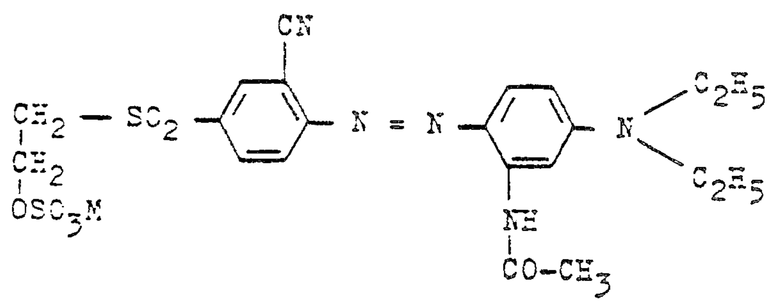

dans laquelle M représente un atome d'hydrogène ou, de préférence, un métal alcalin.

**10.** Composé selon la revendication 1, de formule :

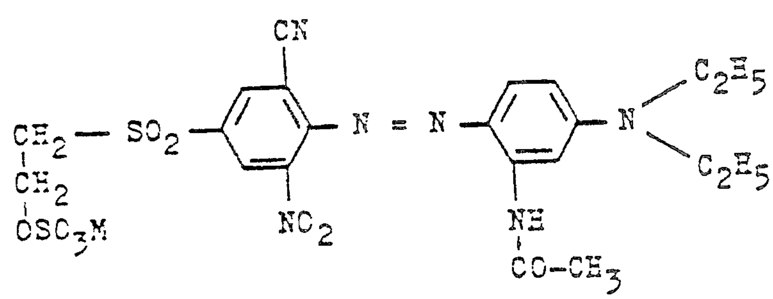

dans laquelle M représente un atome d'hydrogène ou, de préférence, un métal alcalin.

**11.** Composé selon la revendication 1, de formule :

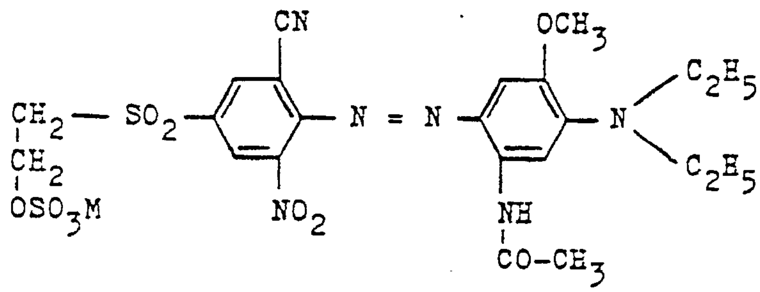

dans laquelle M représente un atome d'hydrogène ou, de préférence, un métal alcalin.

**12.** Composé selon la revendication 1, de formule :

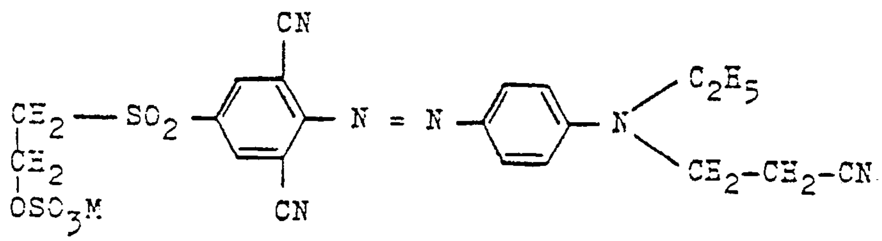

dans laquelle M représente un atome d'hydrogène ou, de préférence, un métal alcalin.

**13.** Procédé pour préparer un composé azoïque de formule générale (1), cité et défini a la revendication 1, procédé caractérisé en ce qu'on fait réagir un composé azoïque de formule générale (2) :

$$(Y-SO_2)_n - \underset{}{\overset{(Hal)_m}{\overset{|}{D}}} - N = N - K \qquad (2)$$

(dans laquelle Y, m, n, D et K ont les sens indiqués à la revendication 1, et Hal représente un atome d'halogène, qui est fixé sur D sur les positions ortho par rapport au groupe azoïque) dans un milieu liquide de réaction avec du cyanure de cuivre-(I) ou avec un composé complexe de cyanure de cuivre, en opérant en l'absence ou en présence d'un catalyseur.

**14.** Utilisation d'un composé azoïque répondant à la formule générale (1), cité et défini à la revendication 1, pour teindre des matières hydrophiles et des matières hydrophobes, en particulier des matières fibreuses, ou des mélanges de telles matières.

**15.** Utilisation selon la revendication 14, caractérisé en ce que la matière est une matière en fibres de cellulose ou est de la laine.

**16.** Utilisation selon la revendication 14, caractérisée en ce que la matière est une matière comportant des fibres en un ester de cellulose, en un polyamide synthétique ou en un polyester.

**17.** Procédé pour teindre (ce qui comprend l'impression) d'une matière en fibres hydrophiles contenant des groupes hydroxy et/ou carboxamides, selon lequel on applique sur la matière un colorant à partir d'une solution aqueuse et on le fixe à l'aide d'un agent à action alcaline, procédé caractérisé en ce qu'on utilise comme colorant un composé répondant à la formule (1), composé cité et défini à la revendication 1.

**18.** Procédé pour teindre une matière en fibres synthétiques hydrophobes, de préférence une matière en des fibres de polyester non modifiées ou en polyester modifié, procédé caractérisé en ce qu'on soumet la matière fibreuse, dans une solution aqueuse d'un composé répondant à la formule générale (1) citée et définie à la revendication 1, à un traitement de chauffage effectué en présence d'un agent de fixation des acides.

**19.** Procédé pour teindre (ce qui comprend l'impression) d'une matière synthétique hydrophobe, de préférence une matière en des fibres de polyester non modifiées ou de polyester modifié, procédé caractérisé en ce qu'on applique un composé azoïque, répondant à la formule générale (1) de la revendication 1, à partir d'une solution aqueuse ou à l'aide d'une pâte aqueuse d'impression, en présence d'un agent de fixation des acides, sur la matière, on sèche ensuite la matière puis on la soumet à un traitement de chauffage (traitement "thermosol").

**20.** Procédé pour teindre (ce qui comprend l'impression) d'une étoffe qui est un mélange, en particulier une étoffe qui est un mélange de fibres de polyester et de coton, procédé caractérisé en ce qu'on applique un composé azoïque, répondant à la formule générale (1) de la revendication 1, à partir d'une solution aqueuse ou à l'aide d'une pâte aqueuse d'impression sur la matière, on surfoularde ou surimprime la matière à l'aide d'un agent de fixation des acides présent dans une préparation convenable, puis on soumet la matière à un traitement "thermosol".

Revendications pour l'Etat contractant suivant: ES

**1.** Procédé pour préparer un composé azoïque. qui répond à la formule générale (1) :

$$(Y-SO_2)_n-\underset{}{\overset{(CN)_m}{\overset{|}{D}}}-N=N-K \qquad (1)$$

(dans laquelle :

m est un nombre valant 1 ou 2, les groupes cyano étant fixés sur D en position ortho par rapport au groupe azoïque,

n est un nombre valant 1 ou 2,

Y représente un groupe sulfato-2 éthyle,

D représente un reste d'un composent diazotable de la série benzénique (éventuellement encore substitué mais dépourvu de groupes anioniques), et

K représente un reste d'un copulant (éventuellement encore substitué mais dépourvu de groupes anioniques),

procédé caractérisé en ce qu'on fait réagir un composé azoïque de formule générale (2) :

$$(Y-SO_2)_n-\overset{(Hal)_m}{\overset{|}{D}}-N=N-K \qquad (2)$$

(dans laquelle Y, m, n, D et K ont les sens indiqués ci-dessus, et Hal représente un atome d'halogène, qui est fixé sur D sur les positions ortho par rapport au groupe azoïque) dans un milieu liquide de réaction avec du cyanure de cuivre(I) ou avec un composé complexe de cyanure de cuivre, en opérant en l' absence ou en présence d' un catalyseur.

**2.** Procédé selon la revendication 1, caractérisé en ce que le copulant est un reste de la série de l'aniline.

**3.** Procédé selon la revendication 1 ou 2, caractérisé en ce que les substituants supplémentaires éventuels fixés sur D et K sont choisis parmi les substituants suivants : un atome d'halogène, un groupe alkyle ayant 1 à 4 atomes de carbone, un groupe alkyle substitué ayant 1 à 4 atomes de carbone, un groupe aryle, alcoxy ayant 1 à 4 atomes de carbone, nitro, cyano, trifluorométhyle ayant 1 à 4 atomes de

carbone, arylsulfonyle, alkylsulfonyle ayant 1 à 4 atomes de carbone, alcanoyloxy ayant 2 à 5 atomes de carbone, aroyloxy, alcanoylamino ayant 2 à 5 atomes de carbone, aroylamino, amino, amino (éventuellement substitué par un groupe alkyle ayant 1 à 4 atomes de carbone, alcényle ayant 2 à 6 atomes de carbone, cycloalkyle et/ou aryle), carbalcoxy ayant 2 à 5 atomes de carbone, carbamoyle, carbamoyle (éventuellement substitué par un groupe alkyle ayant 1 à 4 atomes de carbone, cycloalkyle et/ou aryle), sulfamoyle et sulfamoyle (éventuellement substitué par un groupe alkyle ayant 1 à 4 atomes de carbone, cycloalkyle et/ou aryle), et, dans les substituants précités, les restes aryles pouvant encore être substitués par des substituants non-ioniques.

**4.** Procédé selon la revendication 1 ou 2, caractérisé en ce que les substituants supplémentaires éventuels fixés sur D sont des groupes alkyles ayant 1 à 4 atomes de carbone, des groupes alcoxy ayant 1 à 4 atomes de carbone, des atomes d'halogène, des groupes trifluorométhyles, des groupes alkylsulfonyles ayant 1 à 4 atomes de carbone et des groupes nitro, et en ce que les substituants supplémentaires éventuellement fixés sur K sont choisis parmi les substituants suivants : des groupes alkyles ayant 1 à 4 atomes de carbone, des groupes alcoxy ayant 1 à 4 atomes de carbone, des groupes alcanoylamino ayant 2 à 5 atomes de carbone , des groupes benzoylamino, des groupes alcoxyalcoxy dont les groupes alkyles ou alkylènes ont chacun 1 à 4 atomes de carbone, des atomes de chlore et de brome, des groupes amino et des groupes amino (substitués par un groupe alkyle ayant 1 à 4 atomes de carbone, cycloalkyle ayant 5 à 8 atomes de carbone, alcényle ayant 2 à 4 atomes de carbone et/ou phényle), les restes alkyles présents dans ces groupes amino pouvant être encore chacun substitués par un groupe cyano, un groupe hydroxy, un groupe alcanoyloxy ayant 2 à 5 atomes de carbone, un groupe carbalcoxy ayant 2 à 5 atomes de carbone ou un groupe phényle.

**5.** Procédé selon la revendication 1, caractérisé en ce que D représente un reste benzénique, ce reste D pouvant porter, en plus d'un ou deux groupes cyano et d'un ou deux groupes de formule générale $-SO_2-Y$, encore des substituants choisis parmi un groupe alkyle ayant 1 à 4 atomes de carbone, alcoxy ayant 1 à 4 atomes de carbone, halogéno, trifluorométhyle, alkylsulfonyle ayant 1 à 4 atomes de carbone et nitro, et K représente un reste benzénique qui est substitué, de préférence en position para par rapport au groupe azoïque, par un groupe amino ou par un groupe amino (substitué par un groupe alkyle ayant 1 à 4 atomes de carbone, cycloalkyle ayant 5 à 8 atomes de carbone, alcényle ayant 2 à 4 atomes de carbone et/ou phényle), les restes alkyles présents dans ces groupes amino substitués pouvant porter encore chacun comme substituant un groupe cyano, un groupe hydroxy, un groupe alcanoyloxy ayant 2 à 5 atomes de carbone, un groupe carbalcoxy ayant 2 à 5 atomes de carbone ou un groupe phényle, et K pouvant éventuellement être substitué encore par des substituants choisis parmi un reste alkyle ayant 1 à 4 atomes de carbone, alcoxy ayant 1 à 4 atomes de carbone, alcanoylamino ayant 2 à 5 atomes de carbone, benzoylamino, alcoxyalcoxy dont le reste alkyle et le reste alkylène ont chacun 1 à 4 atomes de carbone, un reste de chlore et un atome de brome.

**6.** Procédé selon une ou plusieurs des revendications 1 à 5, caractérisé en ce que n est un nombre valant 1.

**7.** Procédé selon la revendication 1 ou 2, caractérisé en ce que le composé de formule (1) est un compose azoïque répondant à la formule générale (1a) :

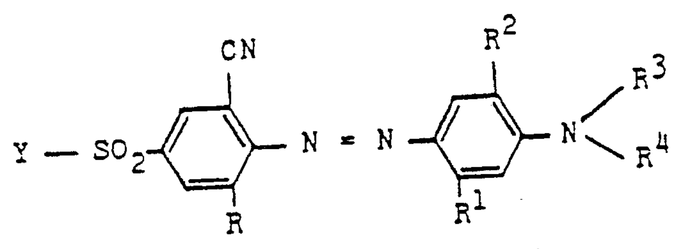

(1a)

dans laquelle :

Y représente le groupe sulfato-2 éthyle,

R représente un atome d'hydrogène, un groupe alkyle ayant 1 à 4 atomes de carbone, alcoxy ayant 1 à 4 atomes de carbone, trifluorométhyle, alkylsulfonyle ayant 1 à 4 atomes de carbone, nitro ou cyano,

$R^1$ représente un atome d'hydrogène, un groupe alkyle ayant 1 à 4 atomes de carbone, alcoxy ayant 1 à 4 atomes de carbone, alcanoylamino ayant 2 à 5 atomes de carbone ou benzoylamino,

$R^2$ représente un atome d'hydrogène, un groupe alkyle ayant 1 à 4 atomes de carbone, alcoxy ayant 1 à 4 atomes de carbone, alcoxy ayant 2 à 4 atomes de carbone (et lui-même substitué par un groupe alcoxy ayant 1 à 4 atomes de carbone ), un atome de chlore ou de brome,

$R^3$ représente un atome d'hydrogène, un groupe alkyle ayant 1 à 4 atomes de carbone, un groupe alkyle ayant 2 à 4 atomes de carbone (et substitué par un reste cyano, hydroxy, carbalcoxy ayant 2 à 5 atomes de carbone ou alcanoyloxy ayant 2 à 5 atomes de carbone) ou un groupe alcényle ayant 2 à 4 atomes de carbone, et

$R^4$ représente un atome d'hydrogène, un groupe alkyle ayant 1 à 4 atomes de carbone, un groupe alkyle ayant 2 à 4 atomes de carbone (substitué par un reste cyano, hydroxy, carbalcoxy ayant 2 à 5 atomes de carbone ou alcanoyloxy) ou un groupe alcényle ayant 2 à 4 atomes de carbone, un groupe cyclohexyle, phényle ou benzyle.

**8.** Procédé selon la revendication 1, caractérisé en ce que le composé de formule (1) est un composé azoïque répondant à la formule générale (1b),

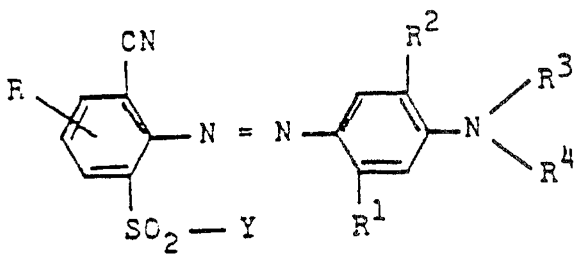

(1b)

dans laquelle :

Y représente le groupe sulfato-2 éthyle,

R représente un atome d'hydrogène, un groupe alkyle ayant 1 à 4 atomes de carbone, alcoxy ayant 1 à 4 atomes de carbone, trifluorométhyle, alkylsulfonyle, ayant 1 à 4 atomes de carbone, nitro ou cyano,

$R^1$ représente un atome d'hydrogène, un groupe alkyle ayant 1 à 4 atomes de carbone, alcoxy ayant 1 à 4 atomes de carbone, alcanoylamino ayant 2 à 5 atomes de carbone ou benzoylamino,

$R^2$ représente un atome d'hydrogène, un groupe alkyle ayant 1 à 4 atomes de carbone, alcoxy ayant 1 à 4 atomes de carbone, alcoxy ayant 2 à 4 atomes de carbone (et lui-même substitué par un groupe alcoxy ayant 1 à 4 atomes de carbone), un atome de chlore ou de brome,

$R^3$ représente un atome d'hydrogène, un groupe alkyle ayant 1 à 4 atomes de carbone, un groupe alkyle ayant 2 à 4 atomes de carbone (et substitué par un reste cyano, hydroxy, carbalcoxy ayant 2 à 5 atomes de carbone ou alcanoyloxy ayant 2 à 5 atomes de carbone), ou un groupe alcényle ayant 2 à 4 atomes de carbone, et

$R^4$ représente un atome d'hydrogène, un groupe alkyle ayant 1 à 4 atomes de carbone, un groupe alkyle ayant 2 à 4 atomes de carbone (substitué par un reste cyano, hydroxy, carbalcoxy ayant 2 à 5 atomes de carbone ou alcanoyloxy) ou un groupe alcényle ayant 2 à 4 atomes de carbone, un groupe cyclohexyle, phényle ou benzyle.

**9.** Procédé selon la revendication 1, caractérisé en ce que le composé de formule (1) est un composé azoïque de formule:

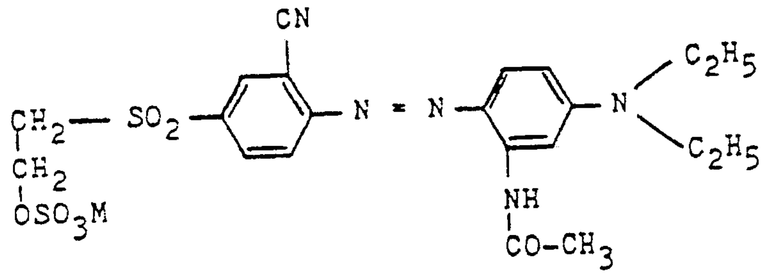

dans laquelle M représente un atome d'hydrogène ou, de préférence, un métal alcalin.

10. Procédé selon la revendication 1, caractérisé en ce que le composé de formule (1) est un composé azoïque de formule:

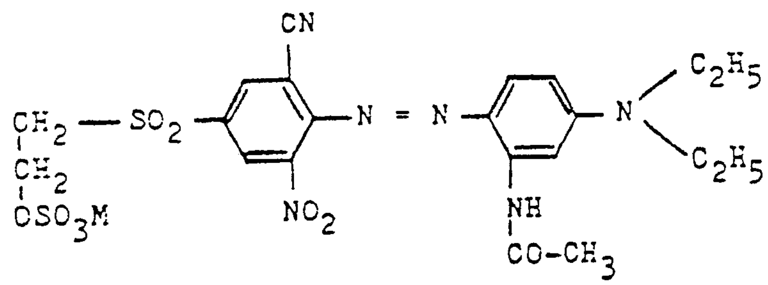

dans laquelle M représente un atome d'hydrogène ou, de préférence, un métal alcalin.

11. Procédé selon la revendication 1, caractérisé en ce que le composé de formule (1) est un composé azoïque de formule:

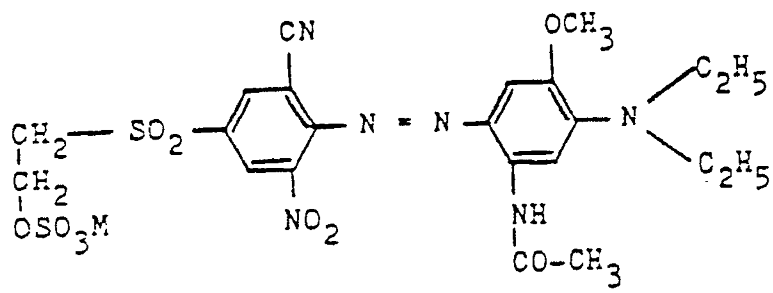

dans laquelle M représente un atome d'hydrogène ou, de préférence, un métal alcalin.

12. Procédé selon la revendication 1, caractérisé en ce que le composé de formule (1) est un composé azoïque de formule:

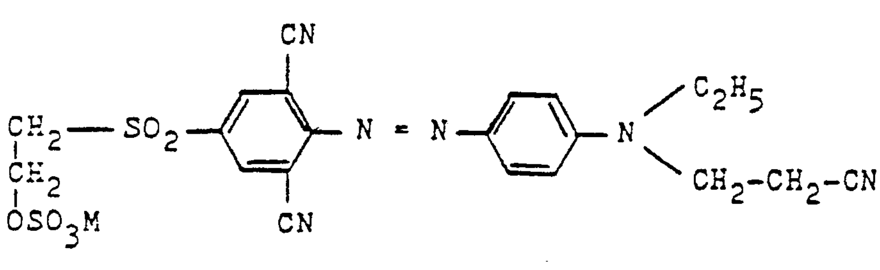

dans laquelle M représente un atome d'hydrogène ou, de préférence, un métal alcalin.

13. Utilisation d'un composé azoïque répondant à la formule générale (1) citée et définie à la revendication 1, pour teindre les matières hydrophiles ou des matières hydrophobes, en particulier des matières fibreuses ou des mélanges de telles matières.

14. Utilisation selon la revendication 13, caractérisée en ce que le matière est une matière en fibres de cellulose ou est de la laine.

15. Utilisation selon la revendication 13, caractérisée en ce que la matière est une matière fibreuse en un ester de cellulose, un polyamide synthétique ou un polyester.

16. Procédé pour teindre (ce qui comprend l'impression) d'une matière en fibres hydrophiles contenant des groupes hydroxy et/ou carboxamides, selon lequel on applique sur la matière un colorant à partir d'une solution aqueuse et on le fixe à l'aide d'un agent à action alcaline, procédé caractérisé en ce qu'on utilise comme colorant un composé répondant à le formule (1), composé cité et défini à la revendication 1.

17. Procédé pour teindre une matière en fibres synthétiques hydrophobes, de préférence une matière en des fibres de polyester non modifiées ou en polyester modifié, procédé caractérisé en ce qu' on soumet la matière fibreuse, dans une solution aqueuse d'un composé répondant à la formule générale (1) citée et définie à la revendication 1, à un traitement de chauffage effectué en présence d'un agent de fixation des acides.

18. Procédé pour teindre (ce qui comprend l'impression d')une matière synthétique hydrophobe, de préférence une matière en des fibres de polyester non modifiées ou de polyester modifié, procédé caractérisé en ce qu'on applique un composé azoïque, répondant à la formule générale (1) de la revendication 1, à partir d'une solution aqueuse ou à l'aide d'une pâte aqueuse d'impression, en présence d'un agent de fixation des acides, sur la matière, on sèche ensuite la matière puis on la soumet à un traitement de chauffage (traitement "thermosol").

19. Procédé pour teindre (ce qui comprend l'impression d')une étoffe qui est un mélange, en particulier une étoffe qui est un mélange de fibres de polyester et de coton, procédé caractérisé en ce qu'on applique un composé azoïque, répondant à le formule générale (1) de la revendication 1, à partir d'une solution aqueuse ou à l'aide d'une pâte aqueuse d'impression sur la matière, on surfoularde ou surimprime la matière à l'aide d'un agent de fixation des acides présent dans une préparation convenable, puis on soumet la matière à un traitement "thermosol".